# EUROPEAN PATENT APPLICATION

(11) **EP 4 620 626 A1**
(43) Date of publication of application: **24.09.2025**
(21) Application number: 24811321.9
(22) Date of filing: 10.05.2024
(51) Int. Cl.: B25J 9/00, B25J 9/16, B25J 13/08, A63B 21/00

(54) **WEARABLE DEVICE AND OPERATING METHOD THEREOF**

(30) Priority: 19.05.2023 KR 20230064980; 10.07.2023 KR 20230089290; 12.12.2023 KR 20230179921
(71) Applicant: Samsung Electronics Co., Ltd., Suwon-si, Gyeonggi-do 16677 (KR)
(72) Inventor: SONG, Sukhoon, Suwon-si, Gyeonggi-do 16677 (KR); PARK, Jiyoung, Suwon-si, Gyeonggi-do 16677 (KR)
(74) Representative: Gulde & Partner
(86) International application number: PCT/KR2024/006364
(87) International publication number: WO 2024/242382

(57) **Abstract**

This wearable device may comprise: a driving module that provides an external force to a user; an angle sensor that obtains angle values by measuring angles of the user's joints; and at least one processor. The at least one processor may: individually and/or collectively receive the angle values from the angle sensor; determine at least one angle value from among the received angle values; determine whether the user is exercising by walking in place on the basis of at least one of the determined at least one angle value or a walking index value of the user; and control the driving module to provide the user with an external force suitable for the walking in-place exercise when it is determined that the user is exercising by walking in place.

## Description

### BACKGROUND

### 1. Field

Embodiments relate to a wearable device and an operating method thereof.

### 2. Description of Related Art

In general, a walking assistance device may refer to a mechanism or device that helps a patient and/or person, who for example cannot walk on his own due to various diseases, accidents, and the like, or one who wants to form/exercise muscles, to perform walking exercises for rehabilitation treatment, exercise, or any other purpose. With the recent intensifying aging societies, a growing number of people experience inconvenience in walking or have difficulty in normal walking due to malfunctioning joint issues, and there is increasing interest in walking assistance devices. A walking assistance device may be worn on a body of a user to assist the user with walking and/or exercise by providing a necessary muscular strength and to induce the user to walk in a normal walking pattern.

### SUMMARY

According to example embodiments, a wearable device may include a driving module (e.g., comprising a motor and/or circuitry) configured to provide a user with an external force, an angle sensor configured to obtain angle values by measuring an angle of a joint of the user, and at least one processor comprising processing circuitry. The at least one processor may receive the angle values from the angle sensor. The at least one processor may determine one or more angle values among the received angle values. The at least one processor may determine whether the user is performing a walking-in-place exercise based on at least one of a walking index value of the user or the determined one or more angle values. The at least one processor may control the driving module to provide the user with an external force suitable for the walking-in-place exercise in response to the determination that the user is performing the walking-in-place exercise.

The determined one or more angle values may include one or more of (i) an angle value at a cross timepoint at which both legs of the user cross, (ii) an angle value at a contact timepoint at which at least a portion of a foot of the user contacts a ground or a take-off timepoint at which the foot is taken off from the ground, (iii) at least one of a maximum or large angle value or a minimum or small angle value for a first period; or (iv) an angle value when an angular velocity value of the joint is at maximum or large.

According to an example embodiment, a wearable device may include a driving module configured to provide a user with an external force, and at least one processor individually and/or collectively configured to determine a first torque value based on a first difference value of both joint angles of the user when the user performs a first motion of raising a leg during a walking-in-place exercise, control the driving module to provide an external force corresponding to the determined first torque value to the leg, determine a second torque value based on a second difference value of both joint angles of the user when the user performs a second motion of placing the leg down during the walking-in-place exercise, and control the driving module to provide an external force corresponding to the determined second torque value to the leg.

According to an example embodiment, an operating method of a wearable device may include obtaining angle values by measuring an angle of a joint of a user, determining one or more angle values among the angle values (here, the determined one or more angle values may include one or more of (i) an angle value at a cross timepoint at which both legs of the user cross, (ii) an angle value at a contact timepoint at which at least a portion of a foot of the user contacts a ground or a take-off timepoint at which the foot is taken off from the ground, (iii) at least one of a maximum or large angle value or a minimum or small angle value for a first period; or (iv) an angle value when an angular velocity value of the joint is at maximum or large), determining whether the user is performing a walking-in-place exercise based on at least one of a walking index value of the user or the determined one or more angle values, and providing the user with an external force suitable for the walking-in-place exercise in response to the determination that the user is performing the walking-in-place exercise.

According to an example embodiment, a wearable device may accurately determine (or recognize) whether a user is performing a walking-in-place exercise and thereby provide the user with a torque (or external force) suitable for a walking-in-place exercise so that the user may not experience inconvenience when performing the walking-in-place exercise.

### BRIEF DESCRIPTION OF THE DRAWINGS

The above and other aspects, features, and advantages of certain example embodiments will be more apparent from the following detailed description, taken in conjunction with the accompanying drawings, in which:
FIG. 1A is a diagram illustrating an overview of a wearable device worn on a body of a user according to an example embodiment.
FIG. 1B is a diagram illustrating an example of a system including a wearable device according to an example embodiment.
FIG. 2A is a rear schematic view of a wearable device according to an example embodiment.
FIG. 2B is a left side view of a wearable device according to an example embodiment.
FIGS. 3A and 3B are block diagrams illustrating examples of a configuration of a wearable device according to an example embodiment.
FIG. 4 is a diagram illustrating an interaction between a wearable device and an electronic device according to an example embodiment.
FIG. 5 is a flowchart illustrating an example of an operating method of a wearable device according to an example embodiment.
FIGS. 6 to 8 are diagrams illustrating an example of determining whether a user is performing a walking-in-place exercise by a wearable device according to an example embodiment.
FIGS. 9 to 11 are diagrams illustrating another example of determining whether a user is performing a walking-in-place exercise by a wearable device according to an example embodiment.
FIGS. 12 and 13A to 13B are diagrams illustrating another example of determining whether a user is performing a walking-in-place exercise by a wearable device according to an example embodiment.
FIGS. 14 to 16 are diagrams illustrating another example of determining whether a user is performing a walking-in-place exercise by a wearable device according to an example embodiment.
FIGS. 17 to 19 are diagrams illustrating another example of determining whether a user is performing a walking-in-place exercise by a wearable device according to an example embodiment.
FIGS. 20 to 22 are diagrams illustrating another example of determining whether a user is performing a walking-in-place exercise by a wearable device according to an example embodiment.
FIG. 23 is a flowchart illustrating another example of determining whether a user is performing a walking-in-place exercise by a wearable device according to an example embodiment.
FIGS. 24 to 26 are diagrams illustrating an example of a method of providing a torque to a walking-in-place exercise of a user by a wearable device according to an example embodiment.
FIGS. 27 and 28 are diagrams illustrating another example of a method of providing a torque to a walking-in-place exercise of a user by a wearable device according to an example embodiment.
FIG. 29 is a block diagram illustrating an example of a configuration of a wearable device according to an example embodiment.
FIG. 30 is a block diagram illustrating an example of a configuration of a wearable device according to an example embodiment.
FIG. 31 is a diagram illustrating another example of a method of providing a torque to a walking-in-place exercise of a user by a wearable device according to an example embodiment.
FIG. 32 is a flowchart illustrating another example of a method of providing a torque to a walking-in-place exercise of a user by a wearable device according to an example embodiment.
FIG. 33 is a diagram illustrating an example of an operation of controlling a torque level based on the heart rate of a user during a walking-in-place exercise of the user by a wearable device according to an example embodiment.
FIG. 34 is a diagram illustrating an example of an operation of determining one or more target heart rates in a target time of a walking-in-place exercise of a user by a wearable device according to an example embodiment.

### DETAILED DESCRIPTION

The following detailed structural or functional description is provided as an example only and various alterations and modifications may be made to the embodiments. Here, the embodiments are not construed as limited to the disclosure and should be understood to include all changes, equivalents, and replacements within the idea and the technical scope of the disclosure.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

It should be noted that if it is described that one component is "connected", "coupled", or "joined" to another component, at least a third component(s) may be "connected", "coupled", and "joined" between the first and second components, although the first component may be directly connected, coupled, or joined to the second component.

As used herein, the singular forms "a", "an", and "the" include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, embodiments will be described in detail with reference to the accompanying drawings. When describing the embodiments with reference to the accompanying drawings, like reference numerals refer to like elements and any repeated description related thereto will be omitted.

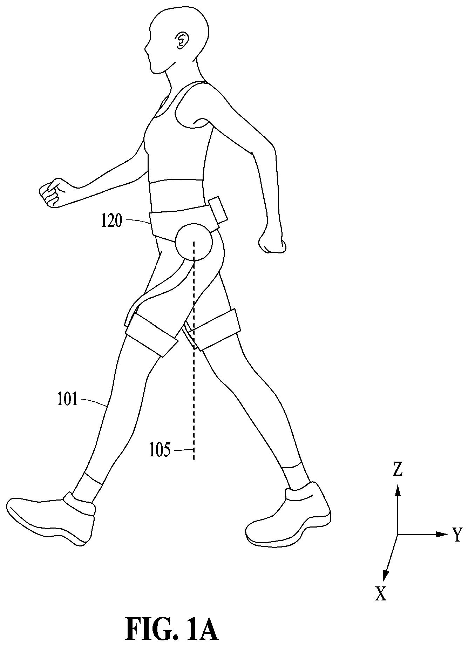

FIG. 1A is a diagram illustrating an overview of a wearable device worn on a body of a user according to an embodiment.

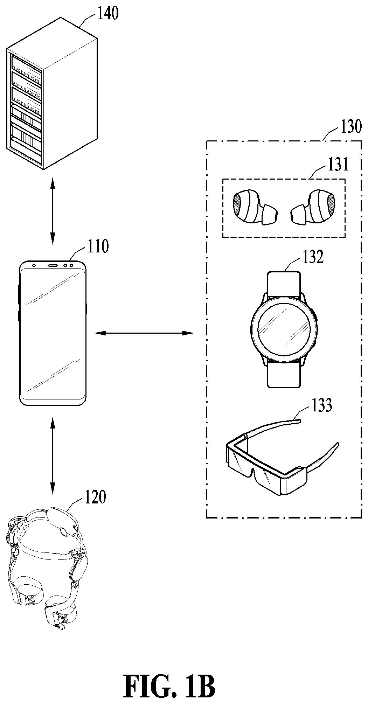

Referring to FIG. 1, a wearable device 120 may be a device worn on a body of a user 101 to assist the user 101 in walking, exercising, and/or working. In embodiments, the term "wearable device" may be replaced with "wearable robot," "walking assistance device," or "exercise assistance device". The user 101 may be a human or an animal, but is not limited thereto. The wearable device 120 may be worn on a body (e.g., a lower body (the legs, ankles, knees, etc.), an upper body (the torso, arms, wrists, etc.), or the waist) of the user 101 to provide an external force such as an assistance force and/or a resistance force to a body motion of the user 101. The assistance force may be a force applied in the same direction as the body motion direction of the user 101, and the resistance force may be a force applied in a direction opposite to the body motion direction of the user 101. The term "resistance force" may also be referred to as "exercise load".

When the wearable device 120 performs a walking assist function to assist the user 101 in walking, the wearable device 120 may assist a portion or entirety of a leg of the user 101 by providing an assistance force to the body of the user 101, thereby assisting the user 101 in walking. The wearable device 120 may enable the user 101 to walk independently or to walk for a long time by providing a force required for the user 101 to walk, thereby extending the walking ability of the user 101. The wearable device 120 may help in improving an abnormal walking habit or walking posture of a walker.

When the wearable device 120 performs an exercise function to enhance the exercise effect of the user 101, the wearable device 120 may hinder a body motion of the user 101 or provide resistance to a body motion of the user 101 by providing a resistance force to the body of the user 101. When the wearable device 120 is, for example, a hip-type wearable device, the wearable device 120 may provide an exercise load to a body motion of the user 101 while being worn on the legs, thereby enhancing the exercise effect of the user 101. The user 101 may perform a walking motion while wearing the wearable device 120 for exercise. In this case, the wearable device 120 may apply a resistance force to the leg motion during the walking motion of the user 101.

In various embodiments, an example of a hip-type wearable device 120 that is worn on the waist and legs is described for ease of description. However, as described above, the wearable device 120 may be worn on another body part (e.g., the upper arms, lower arms, hands, calves, and feet) other than the waist and legs (particularly, the thighs), and the shape and configuration of the wearable device 120 may vary depending on the body part on which the wearable device 120 is worn.

According to an embodiment, the angle of a joint (e.g., a hip joint, a knee joint, etc.) on a reference line 105 may be "0" degrees. The reference line 105 may correspond to, for example, a line in the z-axis direction among the three axes (e.g., the x-axis, the y-axis, and the z-axis) of the joint. An area before the reference line 105 may be a front rotation area of the joint, and an area behind the reference line 105 may be a rear rotation area of the joint. When the joint (e.g., the hip joint, the knee joint, etc.) of the user 101 rotates toward the front of the reference line 105, the angle value of the joint may have a negative value, and when the joint (e.g., the hip joint, the knee joint, etc.) of the user 101 rotates toward the rear of the reference line 105, the angle value of the joint may have a positive value. The front rotation area may correspond to a minus (-) angle area, and the rear rotation area may correspond to a plus (+) angle area. For example, when the angle value of the joint is "-30" degrees, it may indicate that the joint rotates "30" degrees in a forward direction from the reference line 105, and when the angle value of the joint is "+20" degrees, it may indicate that the joint rotates "20" degrees in a backward direction from the reference line 105.

Depending on the implementation, the front rotation area may correspond to a plus (+) angle area, and the rear rotation area may correspond to a minus (-) angle area. In this case, when the joint of the user 101 rotates toward the front of the reference line 105, the angle value of the joint may have a positive value, and when the joint of the user 101 rotates toward the rear of the reference line 105, the angle value of the joint may have a negative value. For example, when the angle value of the joint is "+40" degrees, it may indicate that the joint rotates "40" degrees in a forward direction from the reference line 105, and when the angle value of the joint is "-10" degrees, it may indicate that the joint rotates "10" degrees in a backward direction from the reference line 105.

In the embodiments described below, the front rotation area may correspond to a minus (-) angle area, and the rear rotation area may correspond to a plus (+) angle area.

FIG. 1B is a diagram illustrating an example of a system including a wearable device according to an embodiment.

Referring to FIG. 1B, an electronic device 110 may communicate with the wearable device 120 and remotely control the wearable device 120. The electronic device 110 may be various types of devices. The electronic device 110 may include, for example, a portable communication device (e.g., a smart phone), a computer device, a portable multimedia device, or a home appliance, but is not limited thereto.

According to an embodiment, the electronic device 110 and/or the wearable device 120 may be connected to another wearable device 130. For example, the wearable device 120, the electronic device 110, and the other wearable device 130 may be connected to each other through a wireless communication link (e.g., a Bluetooth communication link). The other wearable device 130 may include, for example, wireless earphones 131, a smart watch 132, or smart glasses 133, but is not limited thereto. The smart watch 132 may be a watch-type wearable device (or a watch-type electronic device), and the smart glasses 133 may be an eyewear-type wearable device (or an eyewear-type electronic device).

In an embodiment, the smart watch 132 may control the wearable device 120. When the smart watch 132 is connected, directly or indirectly, to the electronic device 110 through a wireless communication link, and the electronic device 110 is connected to the wearable device 120 through a wireless communication link, the smart watch 132 may control the wearable device 120 through the electronic device 110. Embodiments are not limited thereto, and the smart watch 132 may be directly connected to the wearable device 120 and control the wearable device 120.

In an embodiment, the electronic device 110 may transmit, to the other wearable device 130, a control signal to instruct to provide the user 101 with feedback corresponding to a state of the wearable device 120. The other wearable device 130 may provide (or output) feedback (e.g., at least one of visual feedback, auditory feedback, or haptic feedback) corresponding to the state of the wearable device 120 in response to the reception of the control signal.

In an embodiment, the electronic device 110 may communicate with a server 140 using short-range wireless communication (e.g., Wi-Fi) or mobile communication (e.g., 4G, 5G, etc.).

In an embodiment, the electronic device 110 may receive profile information of the user 101 from the user 101. The profile information may include, for example, at least one of the age, gender, height, weight, or body mass index (BMI), or a combination thereof. The electronic device 110 may transmit the profile information of the user 101 to the server 140.

In an embodiment, the electronic device 110 and/or the wearable device 120 may request the user 101 to perform one or more target motions to determine (or check) the exercise ability of the user 101. The one or more target motions may include, for example, a knee lift, a backward leg stretch, etc. The knee lift may be an exercise (or a motion) that starts from a position of the user 101 standing straight with two feet on the ground and returns to the standing position after lifting a leg backward as much as possible without bending at the waist. The backward leg stretch may be an exercise (a motion) that starts from a position of the user 101 standing straight with the hands on the wall and returns to the standing position after lifting a leg backward as much as possible without bending at the waist.

In an embodiment, the wearable device 120 may obtain motion information of the user 101 performing a target motion using a sensor (e.g., an inertial measurement unit (IMU)), and transmit the obtained motion information to the electronic device 110. The electronic device 110 may transmit the obtained motion information to the server 140.

In an embodiment, the server 140 may determine a target amount of exercise of the user 101 for each of the exercise types (e.g., strength training, balance exercise, and aerobic exercise) through the profile information and motion information received from the electronic device 110. The server 140 may transmit the target amount of exercise for each exercise type to the electronic device 110.

In an embodiment, the server 140 may include a database in which information about a plurality of exercise programs to be provided to the user 101 through the wearable device 120 is stored. For example, the server 140 may manage a user account of the user 101 of the electronic device 110 or the wearable device 120. The server 140 may store and manage an exercise program performed by the user 101 and a result of performing the exercise program in link with the user account.

In an embodiment, the electronic device 110 and/or the server 140 may provide the user 101 with various exercise programs to achieve an exercise goal in various exercise environments desired by the user 101. The exercise goal may include, for example, at least one of muscle strength improvement, physical strength improvement, cardiovascular endurance improvement, core stability improvement, flexibility improvement, or symmetry improvement, or a combination thereof.

In an embodiment, the electronic device 110 and/or the server 140 may recommend exercise programs to the user 101 to achieve the exercise goal of the user 101. Each exercise program may include one or more exercise modes. For example, each exercise mode may be about a body motion to achieve a predetermined exercise goal. For example, running may be an exercise mode for improving the cardiovascular endurance of the user 101. For example, a lunge may be an exercise mode for improving the core stability of the user 101. A combination of a plurality of exercise modes forming each exercise program may vary according to the exercise goal of the user 101. The electronic device 110 may provide the user 101 with various exercise programs according to the combination of the plurality of exercise modes, even for the same exercise goal.

In an embodiment, the plurality of exercise modes may be stored in the electronic device 110 or the server 140 as a database. The electronic device 110 or the server 140 may generate the plurality of exercise programs based on a variety of information about the user 101 and recommend a target exercise program among the plurality of exercise programs to the user 101 in consideration of the exercise goal or an exercise performance state of the user 101. For example, the electronic device 110 or the server 140 may determine the target exercise program to recommend to the user 101 based on at least one of the exercise goal, an exercise history, or an exercise performance result of the user 101. Accordingly, a new exercise program may be recommended to the user 101 even if the user 101 performs an exercise every day under the same exercise goal, and the user 101 may feel like performing a different exercise from the previous exercise by performing the new exercise program.

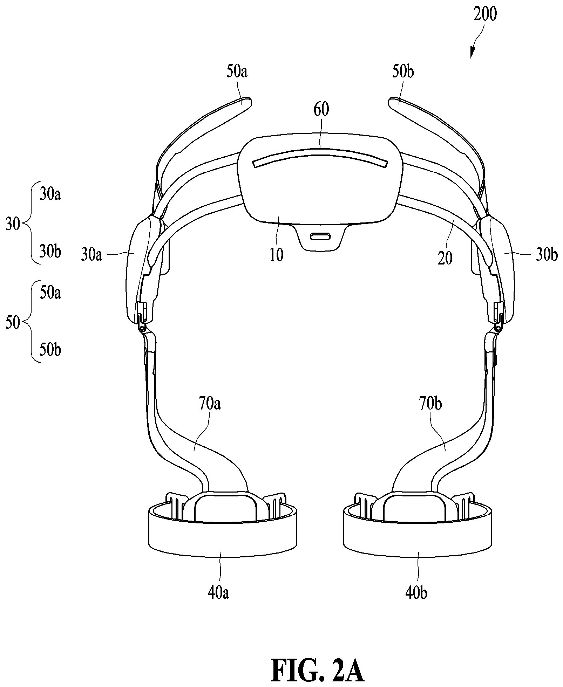

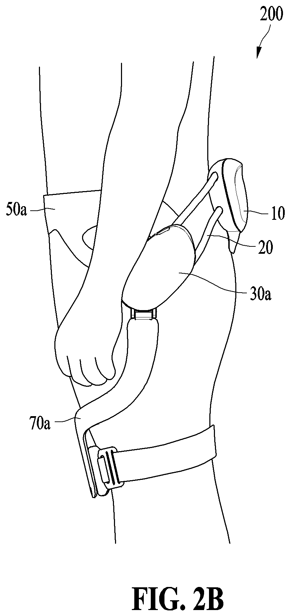

FIG. 2A is a rear schematic view of a wearable device according to an embodiment. FIG. 2B is a left side view of the wearable device according to an embodiment.

A wearable device 200 shown in FIGS. 2A and 2B may be an example of the wearable device 120.

Referring to FIG. 2A, according to an embodiment, the wearable device 200 may include a base body 10, a base frame 20, a driving module 30, thigh fastening portions 40a and 40b, a main belt 50, and leg driving frames 70a and 70b.

According to an embodiment, the base body 10 may be positioned on the lumbar region (an area of the lower back) of the user 101 while the user 101 is wearing the wearable device 200. The base body 10 may be mounted on the lumbar region of the user 101 to provide a cushioning feeling to the lower back of the user 101 and may support the lower back of the user 101. The base body 10 may be hung on the hip region (an area of the hips) of the user 101 to prevent or reduce a chance of the wearable device 200 from being separated downward due to gravity while the user 101 is wearing the wearable device 200. The base body 10 may distribute a portion of the weight of the wearable device 200 to the lower back of the user 101 while the user 101 is wearing the wearable device 200. The base body 10 may be connected, directly or indirectly, to the base frame 20. Base frame connecting elements (not shown) to be connected, directly or indirectly, to the base frame 20 may be provided at both end portions of the base body 10.

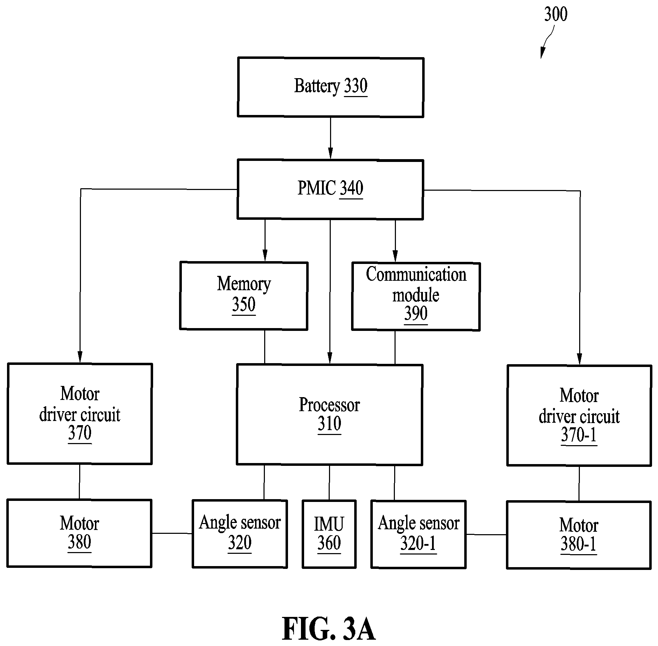

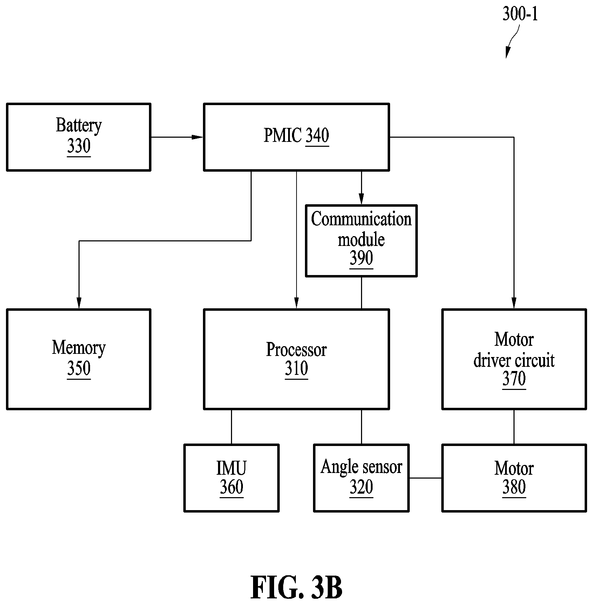

According to an embodiment, the base body 10 may include a lighting unit 60. The lighting unit 60 may include a plurality of light sources (e.g., light-emitting diodes (LEDs)). The lighting unit 60 may emit light by control of a processor (e.g., a processor 310 of FIGS. 3A and 3B). According to embodiments, the processor may control the lighting unit 60 such that visual feedback corresponding to the state of the wearable device 200 (e.g., a booting state, a sensing state, etc.) may be provided (or output) to the user 101 through the lighting unit 60.

Each "processor" herein includes processing circuitry, and/or may include multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

According to an embodiment, the base frame 20 may extend from both end portions of the base body 10. The lumbar region of the user 101 may be accommodated inside the base frame 20. The base frame 20 may include at least one rigid body beam. Each beam may be in a curved shape having a preset curvature to enclose the lumbar region of the user 101. The main belt 50 may be connected, directly or indirectly, to an end portion of the base frame 20. The driving module 30 may be mounted on the base frame 20. The base frame 20 may include a connector (not shown) for mounting the driving module 30 thereon.

According to an embodiment, the driving module 30 may include a first driving module 30a positioned on the left side of the user 101 while the user 101 is wearing the wearable device 200, and a second driving module 30b positioned on the right side of the user 101 while the user 101 is wearing the wearable device 200. Each driving module herein may comprise at least one of: a motor and/or circuitry. Angle sensor(s) may or may not be part of a driving module in various example embodiments.

According to an embodiment, the first driving module 30a may include a first angle sensor (e.g., a first encoder or a first Hall sensor) for measuring the left hip joint angle of the user 101. The second driving module 30b may include a second angle sensor (e.g., a second encoder or a second Hall sensor) for measuring the right hip joint angle of the user 101.

According to an embodiment, the first driving module 30a may include a first actuator and a first reducer, and the second driving module 30b may include a second actuator and a second reducer. An output end of the first actuator may be connected, directly or indirectly, to an input end of the first reducer, and an output end of the second actuator may be connected, directly or indirectly, to an input end of the second reducer.

According to an embodiment, the processor (e.g., the processor 310 described later) may determine a torque value (e.g., a torque value *τₗ*(*t*) to be described later) and control the first actuator to generate a torque based on the determined torque value (e.g., *τₗ*(*t*)). With this control, the first actuator may generate the torque, and the generated torque may be reduced by the first reducer. The torque reduced by the first reducer may rotate the first leg driving frame 70a. The torque reduced by the first reducer may be provided, for example, to the left leg of the user 101 through the first leg driving frame 70a. The processor (e.g., the processor 310 described later) may determine a torque value (e.g., a torque value *τᵣ*(*t*) to be described later) and control the second actuator to generate a torque based on the determined torque value (e.g., *τᵣ*(*t*)). With this control, the second actuator may generate the torque, and the generated torque may be reduced by the second reducer. The torque reduced by the second reducer may rotate the second leg driving frame 70b. The torque reduced by the second reducer may be provided, for example, to the right leg of the user 101 through the second leg driving frame 70b.

In an embodiment, the leg driving frames 70a and 70b may support the legs (e.g., thighs) of the user 101 when the wearable device 200 is worn on the legs of the user 101. The leg driving frames 70a and 70b may include the first leg driving frame 70a configured to support the left leg of the user 101 and the second leg driving frame 70b configured to support the right leg of the user 101.

According to an embodiment, the leg driving frames 70a and 70b may, for example, transmit the torques generated by the driving modules 30a and 30b (e.g., the torques reduced by the reducers) to the thighs of the user 101. As one end portions of the leg driving frames 70a and 70b are connected, directly or indirectly, to the driving modules 30a and 30b to rotate, and the other end portions of the leg driving frames 70a and 70b are connected, directly or indirectly, to the thigh fastening portions 40a and 40b, the leg driving frames 70a and 70b may transmit the torques generated by the driving modules 30a and 30b to the thighs of the user 101 while supporting the thighs of the user 101. For example, the leg driving frames 70a and 70b may push or pull the thighs of the user 101. The leg driving frames 70a and 70b may extend in the longitudinal direction of the thighs of the user 101. The leg driving frames 70a and 70b may be bent to surround at least a portion of the circumferences of the thighs of the user 101.

According to an embodiment, the thigh fastening portions 40a and 40b may be connected, directly or indirectly, to the leg driving frames 70a and 70b and may fasten the leg driving frames 70a and 70b to the thighs. The thigh fastening portions 40a and 40b may include a first thigh fastening portion 40a configured to fasten the first leg driving frame 70a to the left thigh of the user 101 and a second thigh fastening portion 40b configured to fasten the second leg driving frame 70b to the right thigh of the user 101.

According to an embodiment, the first thigh fastening portion 40a may include a first cover, a first fastening frame, and a first strap, and the second thigh fastening portion 40b may include a second cover, a second fastening frame, and a second strap. The first cover and the second cover may be arranged on one sides of the thighs of the user 101. The first cover and the second cover may be arranged on the front surfaces of the thighs of the user 101. The first cover and the second cover may be arranged in the circumferential directions of the thighs of the user 101. The first cover and the second cover may extend to both sides from the other end portions of the leg driving frames 70a and 70b and may include curved surfaces corresponding to the thighs of the user 101. One ends of the first cover and the second cover may be connected, directly or indirectly, to the fastening frames, and the other ends thereof may be connected, directly or indirectly, to the straps.

According to an embodiment, the first fastening frame and the second fastening frame may be arranged, for example, to surround at least some portions of the circumferences of the thighs of the user 101, thereby preventing or reducing the thighs of the user 101 from being separated from the leg driving frames 70a and 70b. The first fastening frame may have a fastening structure that connects the first cover and the first strap, and the second fastening frame may have a fastening structure that connects the second cover and the second strap.

According to an embodiment, the first strap may enclose the remaining portion of the circumference of the left thigh of the user 101 that is not covered by the first cover and the first fastening frame, and the second strap may enclose the remaining portion of the circumference of the right thigh of the user 101 that is not covered by the second cover and the second fastening frame. The first strap and the second strap may include, for example, an elastic material (e.g., a band).

According to an embodiment, the main belt 50 may be connected, directly or indirectly, to the base frame 20. The main belt 50 may include a first main belt 50a configured to enclose the left abdomen of the user 101 while the user 101 is wearing the wearable device 200, and a second main belt 50b configured to enclose the right abdomen of the user 101 while the user 101 is wearing the wearable device 200. The first main belt 50a may be formed in a shape having a longer length than the second main belt 50b, but is not limited thereto, and the first main belt 50a may be formed in a shape having the same length as or a shorter length than the second main belt 50b. The first main belt 50a and the second main belt 50b may be connected to both end portions of the base frame 20, respectively. The main belt 50 may be bent in a direction to surround the abdomen of the user 101 when the body of the user 101 is inserted in such a direction that it is accommodated in the wearable device 200. The first main belt 50a and the second main belt 50b may be connected to each other while the user 101 is wearing the wearable device 200. The main belt 50 may distribute a portion of the weight of the wearable device 200 to the abdomen of the user 101 while the user 101 is wearing the wearable device 200.

Referring to FIG. 2B, the base body 10 may be mounted on the back of the lumbar region of the user 101 and be hung on the hip region of the user 101, thereby supporting a portion of the weight of the wearable device 200. The first driving module 30a may be arranged on the left lumbar region of the user 101. The base frame 20 may extend from the end portion of the base body 10 and be inclined in a direction toward the first driving module 30a. The first main belt 50a mounted on the base frame 20 may surround the left abdomen of the user 101.

FIGS. 3A and 3B are block diagrams illustrating examples of a configuration of a wearable device according to an embodiment.

According to an embodiment, a wearable device 300 of FIG. 3A may include the processor 310, angle sensors 320 and 320-1, a battery 330, a power management integrated circuit (PMIC) 340, a memory 350, an IMU 360, motor driver circuits 370 and 370-1, motors 380 and 380-1 (e.g., the first and second actuators described with reference to FIG. 2A), and a communication module 390 comprising communication circuitry.

Although the plurality of angle sensors 320 and 320-1, the plurality of motor driver circuits 370 and 370-1, and the plurality of motors 380 and 380-1 are shown in FIGs. 3A-3B, which is merely an example, the wearable device 300-1 in the example shown in FIG. 3B may include a single angle sensor 320, a single motor driver circuit 370, and a single motor 380. Also, according to implementation, the wearable devices 300 and 300-1 may include a plurality of processors. The number of motor driver circuits, the number of motors, or the number of processors may vary depending on a body part on which the wearable devices 300 and 300-1 are worn.

The wearable device 300 in FIG. 3A and the wearable device 300-1 of FIG. 3B may be examples of the wearable device 120 and the wearable device 200.

According to an embodiment, the angle sensor 320, the motor driver circuit 370, and the motor 380 may be included in the first driving module 30a of FIG. 2A, and the angle sensor 320-1, the motor driver circuit 370-1, and the motor 380-1 may be included in the second driving module 30b of FIG. 2A.

According to an embodiment, the angle sensor 320 of Fig. 3B and the angle sensor 320-1 of Fig. 3A may each correspond to a Hall sensor, but are not limited thereto.

According to an embodiment, the angle sensor 320 may measure or sense at least one of the angle, angular velocity, or angular acceleration of a first joint (e.g., the left hip joint, etc.) of the user 101. The angle sensor 320 may transmit the measurement result (e.g., at least one of the angle value, angular velocity value, or angular acceleration value of the first joint) to the processor 310. For example, the angle sensor 320 may obtain the angular acceleration value by measuring the angular acceleration of the left hip joint angle of the user 101, and transmit the obtained angular acceleration value to the processor 310. Embodiments are not limited thereto, and the angle sensor 320 may obtain the angle value or angular velocity value by measuring the angle or angular velocity of the left hip joint angle of the user 101, and transmit the obtained angle value or angle velocity value to the processor 310. The processor 310 may calculate the angular acceleration value of the left hip joint angle through the angle value or angular velocity value received from the angle sensor 320.

According to an embodiment, the angle sensor 320-1 may measure or sense at least one of the angle, angular velocity, or angular acceleration of a second joint (e.g., the right hip joint) of the user 101. The angle sensor 320-1 may transmit the measurement result (e.g., at least one of the angle value, angular velocity value, or angular acceleration value of the second joint) to the processor 310. For example, the angle sensor 320-1 may obtain the angular acceleration value by measuring the angular acceleration of the right hip joint angle of the user 101, and transmit the obtained angular acceleration value to the processor 310. Embodiments are not limited thereto, and the angle sensor 320-1 may obtain the angle value or angular velocity value by measuring the angle or angular velocity of the right hip joint angle of the user 101, and transmit the obtained angle value or angle velocity value to the processor 310. The processor 310 may calculate the angular acceleration value of the right hip joint angle through the angle value or angular velocity value received from the angle sensor 320-1.

According to an embodiment, the angle sensor 320 and the angle sensor 320-1 may additionally measure the knee angles and ankle angles of the user 101 according to the positions of the angle sensor 320 and the angle sensor 320-1.

According to an embodiment, the wearable devices 300 and 300-1 may include a potentiometer. The potentiometer may sense an R-axis joint angle, an L-axis joint angle, an R-axis joint angular velocity, and an L-axis joint angular velocity according to a walking motion of the user 101. The R/L axis may be a reference axis for the right/left leg of the user 101. For example, the R/L axis may be set to be vertical to the ground and set such that a front side of a body of a person has a negative value and a rear side of the body has a positive value.

According to an embodiment, the PMIC 340 may charge the battery 330 using power supplied from an external power source. For example, the external power source and the wearable devices 300 and 300-1 may be connected through a cable (e.g., a universal serial bus (USB) cable, etc.). The PMIC 340 may receive power from the external power source through the cable, and charge the battery 330 using the received power. According to an embodiment, the PMIC 340 may charge the battery 330 through a wireless charging method.

According to an embodiment, the PMIC 340 may transmit the power stored in the battery 330 to the components (e.g., the processor 310, the angle sensors 320 and 320-1, the memory 350, the IMU 360, the motors 380 and 380-1, etc.) in the wearable devices 300 and 300-1. The PMIC 340 may, for example, adjust the power stored in the battery 330 to a voltage or current level suitable for the components in the wearable device 300. The PMIC 340 may include, for example, a converter (e.g., a direct current (DC)-DC converter) or a regulator (e.g., a low-dropout (LDO) regulator or a switching regulator) configured to perform the adjustment described above.

According to an embodiment, the PMIC 340 may determine state information (e.g., a state of charge, a state of health, an overvoltage, a low voltage, an overcurrent, an overcharge, an overdischarge, an overheating, a short circuit, or a swelling) of the battery 330, and transmit the state information of the battery 330 to the processor 310. The processor 310 may provide the state information of the battery 330 to the user 101. For example, the processor 310 may output the state information of the battery 330 through at least one of a sound output module, a vibration output module, or a display module described below. For example, the processor 310 may transmit the state information of the battery 330 to the electronic device 110 through the communication module 390, and the electronic device 110 may display the state information of the battery 330 on the display.

According to an embodiment, the IMU 360 may obtain or measure acceleration information (or posture information) of the user 101. For example, the IMU 360 may measure or obtain 3-axis (e.g., x-axis, y-axis, and z-axis) accelerations and rotation angles (e.g., roll, pitch, and yaw) according to a motion of the user 101. The IMU 360 may transmit the obtained acceleration information (e.g., the measured 3-axis accelerations and rotation angles) to the processor 310.

According to an embodiment, the processor 310 may control the overall operation of the wearable devices 300 and 300-1.

According to an embodiment, the processor 310 may, for example, control the components (e.g., the motor driver circuits 370 and 370-1, etc.) in the wearable devices 300 and 300-1 by executing software (e.g., a program or instructions) stored in the memory 350, and perform various data processing or computation. As at least a portion of the data processing or computation, the processor 310 may store data received from other components (e.g., the IMU 360, the angle sensors 320 and 320-1, etc.) in the memory 350, and process the instructions or data stored in the memory 350. One or more instructions executed by the processor 310 may cause the processor 310 (or the wearable device 300) to perform the operation of the processor 310 (or the operation of the wearable device 300) described later.

According to an embodiment, the processor 310 may determine torque values for generating torques for the motors 380 and 380-1. The processor 310 may control the motor driver circuits 370 and 370-1 so that external forces (or torques) corresponding to the determined torque values may be provided to the user 101. For example, the processor 310 may determine a state factor *y*(*t*) indicating a state of a motion of the user 101 according to an equation *y*(*t*) = sin(*q_r*(*t*)) - sin(*q_l*(*t*)). *q_l*(*t*) may denote the angle value of the first joint (e.g., the left hip joint), and *q_r*(*t*) may denote the angle value of the second joint (e.g., the right hip joint). The processor 310 may determine a torque value *τ*(*t*) *= κy*(*t -*△ *t*) according to an equation *τ*(*t*). A gain *k* may be a parameter indicating the magnitude and direction of a torque generated by each of the motors 380 and 380-1. As the value of the gain *κ* increases, a greater torque may be output. If the gain *κ* is negative, a torque (or a resistance torque) acting as a resistance force may be output to the user 101, and if the gain *κ* is positive, a torque (or an assistance torque) acting as an assistance force may be output to the user 101. A delay *Δt* may be a parameter associated with a torque output timing. The value of the gain *κ* and the value of the delay *Δt* may be preset, and may be adjustable by the user 101, the wearable device 300, or the electronic device 110 paired with the wearable device 300. The processor 310 may determine a torque value *τᵣ*(*t*) for generating a torque from the motor 380-1 according to an equation *τᵣ*(*t*) *= τ*(*t*), and determine a torque *τₗ*(*t*) for generating a torque from the motor 380 according to *τₗ*(*t*) *= -τ*(*t*).

According to an embodiment, the motor driver circuits 370 and 370-1 may control the motors 380 and 380-1 based on the torque values received from the processor 310, and the motors 380 and 380-1 may generate torques by this control.

One or more of 370, 380, and/or 320 may be part of a driving module, referring to Fig. 3B for example.

According to an embodiment, the communication module 390 may support the establishment of a direct (or wired) communication channel or a wireless communication channel between the wearable device 300, 300-1 and an external electronic device, and support the communication through the established communication channel. The communication module 390 may include one or more communication processors configured to support direct (or wired) communication or wireless communication. According to an embodiment, the communication module 390 may include a wireless communication module (e.g., a cellular communication module, a short-range wireless communication module, or a global navigation satellite system (GNSS) communication module) or a wired communication module (e.g., a local area network (LAN) communication module or a power line communication (PLC) module). A corresponding one of these communication modules may communicate with the external electronic device via a first network (e.g., a short-range communication network such as Bluetooth^{™}, wireless-fidelity (Wi-Fi) direct, or infrared data association (IrDA)) or a second network (e.g., a legacy cellular network, a 5G network, a next-generation communication network, the Internet, or a computer network). These various types of communication modules may be implemented as a single component (e.g., a single chip), or may be implemented as multiple components (e.g., multiple chips) separate from each other.

According to an embodiment, the wearable devices 300 and 300-1 may include a display module. The display module may include, for example, a display and/or a lighting unit (e.g., the lighting unit 60 of FIG. 2A). The processor 310 may control the display module so that the display module may provide visual feedback to the user 101.

According to an embodiment, the wearable devices 300 and 300-1 may include a sound output module. The sound output module may include, for example, a speaker. The processor 310 may control the sound output module so that the sound output module may provide auditory feedback to the user 101.

According to an embodiment, the wearable devices 300 and 300-1 may include a vibration output module. The vibration output module may include, for example, a vibration motor. The processor 310 may control the vibration output module so that the vibration output module may provide tactile feedback (or haptic feedback) to the user 101.

According to an embodiment, at least one of the processor 310, the battery 330, the PMIC 340, the memory 350, the IMU 360, the communication module 390, the display module, the sound output module, or the vibration output module, or a combination thereof may be positioned in the base body 10 of FIGS. 2A and 2B.

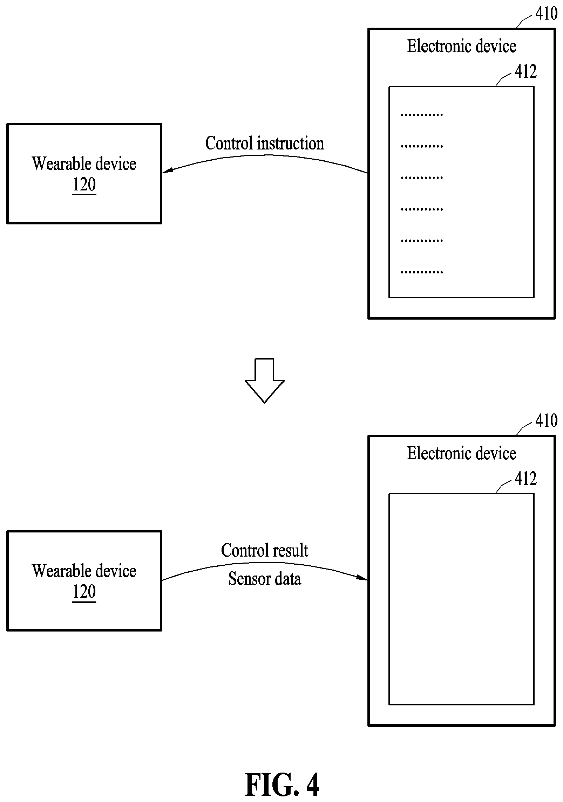

FIG. 4 is a diagram illustrating an interaction between a wearable device and an electronic device according to an embodiment.

Referring to FIG. 4, the wearable device 120 may communicate with an electronic device 410 (e.g., a smart phone or smart watch). For example, the electronic device 410 may be a user terminal of the user 101 who uses the wearable device 120 or a controller device dedicated to the wearable device 120. According to an embodiment, the wearable device 120 and the electronic device 410 may be connected to each other through short-range wireless communication (e.g., Bluetooth^{™} or Wi-Fi communication).

According to an embodiment, the electronic device 410 may verify a state of the wearable device 120 or execute an application to control or operate the wearable device 120. A screen of a user interface (UI) may be displayed to control an operation of the wearable device 120 or determine an operation mode of the wearable device 120 on a display 412 of the electronic device 410 through the execution of the application. The UI may be, for example, a graphical user interface (GUI).

According to an embodiment, the user 101 may input an instruction to control an operation of the wearable device 120 through the GUI screen on the display 412 of the electronic device 410 (e.g., an instruction to instruct the wearable device 120 to operate in an assistance mode of generating an assistance force or an instruction to instruct the wearable device 120 to operate in a resistance mode of generating a resistance force) or change settings of the wearable device 120. The electronic device 410 may generate a control instruction (or control signal) corresponding to an operation control instruction or a setting change instruction input by the user 101 and transmit the generated control instruction to the wearable device 120. The wearable device 120 may operate according to the received control instruction and transmit a control result according to the control instruction and/or sensor data measured by the sensor (e.g., the angle sensors 320 and 320-1 and/or the IMU 360) of the wearable device 120 to the electronic device 410. The electronic device 410 may provide the user 101 with result information (e.g., walking ability information, exercise ability information, or exercise posture evaluation information) derived by analyzing the control result and/or the sensor data through the GUI screen.

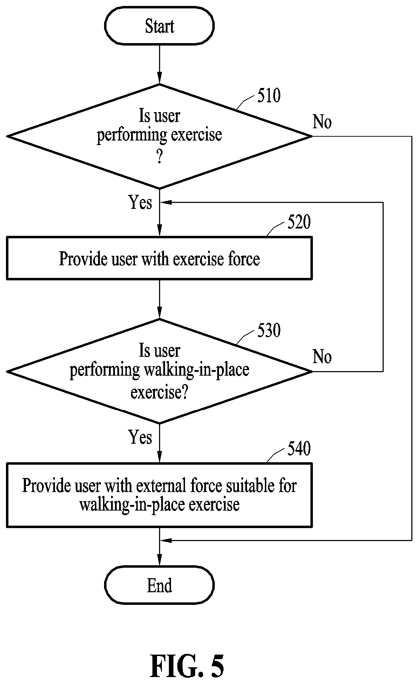

FIG. 5 is a flowchart illustrating an example of an operating method of a wearable device according to an embodiment.

Referring to FIG. 5, in operation 510, the wearable device 120 may determine whether the user 101 is performing an exercise. If "no" in operation 510, then the process may proceed to a point following 540, such as end. If "yes" in operation 510, then to 520. The user 101 may perform a target exercise (e.g., a forward-walking exercise, an exercise according to an exercise program, etc.) while wearing the wearable device 120. The processor 310 of the wearable device 120 may receive sensor data from one or more sensors (e.g., at least one or all of the angle sensor 320, the angle sensor 320-1, or the IMU 360), and determine whether the user 101 is performing an exercise (e.g., a target exercise) based on the sensor data. For example, the processor 310 may receive angle values of a first joint (e.g., the left hip joint, the left knee joint, etc.) from the angle sensor 320, receive angle values of a second joint (e.g., the right hip joint, the right knee joint, etc.) from the angle sensor 320-1, and receive acceleration information of the user 101 from the IMU 360. The processor 310 may determine whether the user 101 is performing an exercise through at least one or all of changes in the angle values of the first j oint, changes in the angle values of the second joint, or the acceleration information of the user 101.

In an embodiment, the wearable device 120 may receive control information indicating a level value of an exercise intensity (e.g., an exercise intensity of the target exercise) selected by the user 101 and/or an operation mode (e.g., an assistance mode or a resistance mode) of the wearable device 120 from the electronic device 110 and/or the other wearable device 130. The wearable device 120 may determine the value of a gain based on the received level value. The wearable device 120 may determine the value of the gain to be greater as the received level value is larger. For example, the level value of the exercise intensity may include "1" to "5", and a value of a gain may be mapped to each level value. As the level value increases from "1" to "5", the exercise intensity may increase, and the value of the gain may increase. The wearable device 120 may determine the sign of the value of the gain to be a first sign (e.g., plus (+)) when the operation mode is determined to be an assistance mode according to the received control information, and determine the sign of the value of the gain to be a second sign (e.g., minus (-)) when the operation mode is determined to be a resistance mode. When the operation mode is the assistance mode, the gain may have, for example, a positive value, and when the operation mode is the resistance mode, the gain may have, for example, a negative value.

In response to the determination that the user 101 is performing an exercise (if YES in operation 510), the wearable device 120 may provide the user 101 with an external force (e.g., as assistance force or resistance force), in operation 520. For example, when the user 101 is performing a forward-walking exercise, the wearable device 120 may determine a torque value (e.g., the torque value described above (e.g., *τₗ*(*t*) and the torque value *τᵣ*(*t*)) based on the angle value of the first joint, the angle value of the second joint, and the values of parameters (e.g., a gain, a delay, etc.), and provide the user 101 with an external force suitable for the forward-walking exercise based on the determined torque value. As another example, the user 101 may perform an exercise according to an exercise program. The wearable device 120 may determine a torque value for the exercise program based on the angle value of the first joint, the angle value of the second joint, and the values of the parameters (e.g., the gain, the delay, etc.), and provide the user 101 with an external force suitable for the exercise according to the exercise program based on the determined torque value.

In operation 530, the wearable device 120 may determine whether the user 101 is performing a walking-in-place exercise. According to an embodiment, the processor 310 of the wearable device 120 may determine whether the user 101 is performing a walking-in-place exercise based on one or more of (i) the angle value at a cross timepoint at which both legs of the user 101 cross, (ii) the angle value at a contact timepoint at which at least a portion of a foot of the user 101 contacts the ground or a take-off timepoint at which the foot of the user 101 is taken off from the ground, (iii) at least one of the maximum or large angle value or the minimum or small angle value of a joint (e.g., the first joint and/or the second joint) for a first period, (iv) the angle value of the joint (e.g., the first joint and/or the second j oint) when the angular velocity value of the joint (e.g., the first joint and/or the second joint) is at maximum or large, or (v) a walking index value (e.g., a walking speed value and/or a stride value) of the user 101. Embodiments of operation 530 will be described later.

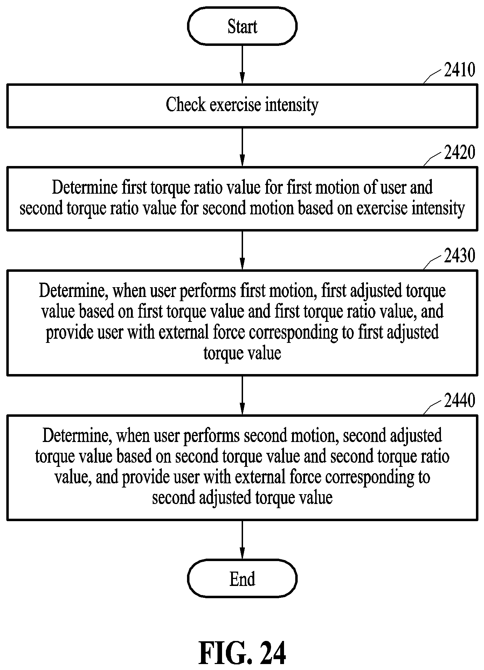

In response to the determination that the user 101 is performing a walking-in-place exercise (if YES in operation 530), the wearable device 120 may provide the user 101 with an external force suitable for a walking-in-place exercise, in operation 540. According to an embodiment, the processor 310 of the wearable device 120 may control the driving module 30 to provide the user 101 with an external force of a first magnitude when the user 101 raises a leg and to provide the user 101 with an external force of a second magnitude that is less than the first magnitude when the user 101 places the leg down, when the user 101 performs the walking-in-place exercise. The processor 310 may control the driving module 30 to provide an external force of a smaller magnitude when the user 101 places the leg down than when raising the leg, when the user 101 performs the walking-in-place exercise. Operation 540 will be described in detail with reference to FIGS. 24 to 26.

According to an embodiment, the wearable device 120 (e.g., the processor 310) may calculate calories burned by a user 101 when an exercise (e.g., a target exercise) of the user 101 is terminated. At this time, the calculated calories may include calories burned by the user 101 while performing a walking-in-place exercise. For example, the total exercise time of the user 101 may be t, and the user 101 may perform the walking-in-place exercise for a time t1 during the target exercise. The wearable device 120 (e.g., the processor 310) may calculate calories (e.g., a) burned by the user 101 while performing the target exercise for a time t-t1, and calculate calories (e.g., b) burned by the user 101 while performing the walking-in-place exercise for the time t1. The wearable device 120 (e.g., the processor 310) may add the calories (e.g., a) burned for the time t-t1 and the calories (e.g., b) burned for the time t1, and transmit the addition result (e.g., a+b) to the electronic device 110. The electronic device 110 may display the calories (e.g., a+b) burned for the total exercise time of the user 101 on the screen.

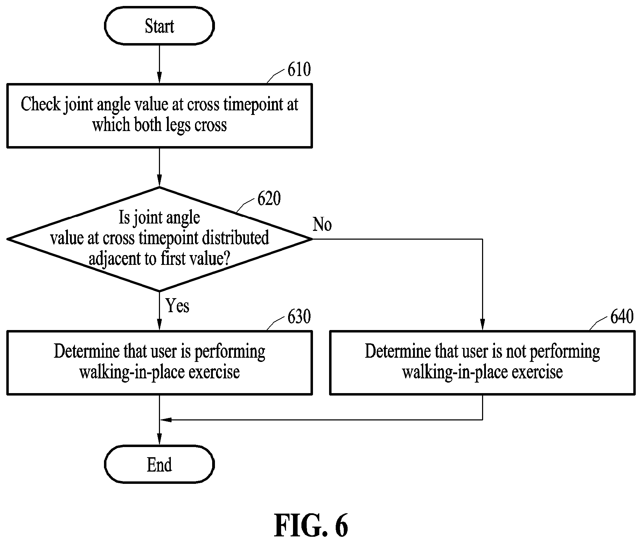

FIGS. 6 to 8 are diagrams illustrating an example of determining whether a user is performing a walking-in-place exercise by a wearable device according to an embodiment.

Operations 610 to 640 of FIG. 6 may be included in operation 530.

Referring to FIG. 6, in operation 610, the wearable device 120 may check the joint angle value at a cross timepoint at which both legs of the user 101 cross. For example, the difference between the angle value of the left hip joint and the angle value of the right hip joint of the user 101 when both legs of the user 101 cross may be "0". In other words, the cross timepoint may correspond to a timepoint at which the difference between the angle value of the left hip joint and the angle value of the right hip joint is "0". The processor 310 may check the angle value of the hip joint when the difference between the angle value of the left hip joint and the angle value of the right hip joint is "0".

In operation 620, the wearable device 120 (e.g., the processor 310) may determine whether the joint angle value (e.g., the angle value of the hip joint) at the cross timepoint is distributed adjacent to a first value (e.g., "0"). For example, the wearable device 120 (e.g., the processor 310) may determine whether the joint angle value (e.g., the angle value of the hip j oint) at the cross timepoint is within a first angle range (e.g., "-5" degrees to "+5" degrees). The processor 310 may determine that the joint angle value at the cross timepoint is distributed adjacent to the first value when the joint angle value at the cross timepoint is within the first angle range. The processor 310 may determine that the joint angle value at the cross timepoint is not distributed adjacent to the first value when the joint angle value at the cross timepoint is not within the first angle range.

According to an embodiment, the processor 310 may determine whether the cross timepoint occurs periodically. When the user 101 performs an exercise (e.g., a squat, a lunge, etc.) including a motion of bending both legs simultaneously, the angle value of the hip joint angle at the cross timepoint may be distributed adjacent to "0" degrees, but the cross timepoint may not occur periodically. As described later, during a walking-in-place exercise, the cross timepoint may occur periodically. The processor 310 may determine whether the cross timepoint occurs periodically to distinguish an exercise including a motion of bending both legs simultaneously from a walking-in-place exercise, and perform operation 620 when the cross timepoint occurs periodically.

In response to the determination that the joint angle value at the cross timepoint is distributed adjacent to the first value (e.g., "0" degrees) (or is within the first angle range) (if YES in operation 620), the wearable device 120 may determine that the user 101 is performing a walking-in-place exercise, in operation 630. In response to the determination that the joint angle value at the cross timepoint is not distributed adjacent to the first value (e.g., "0" degrees) (or is out of the first angle range) (if NO in operation 620), the wearable device 120 may determine that the user 101 is not performing a walking-in-place exercise, in operation 640.

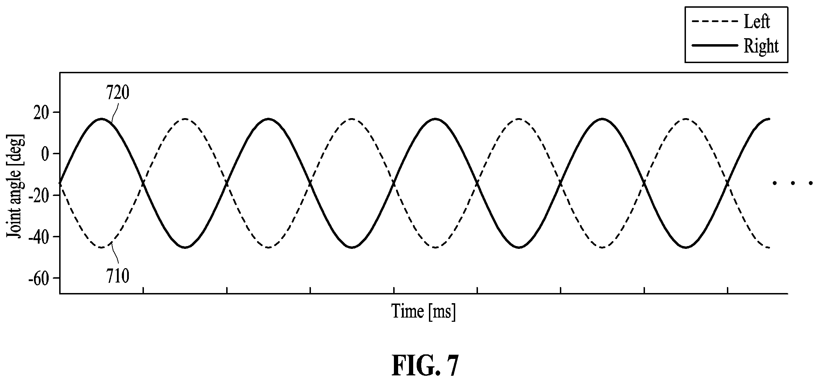

FIG. 7 shows an example of angle values 710 of the left hip joint and angle values 720 of the right hip joint when the user 101 performs a forward-walking exercise. In the example shown in FIG. 7, both legs may cross when the angle value of the left hip joint and the angle value of the right hip joint are, for example, "-15" degrees.

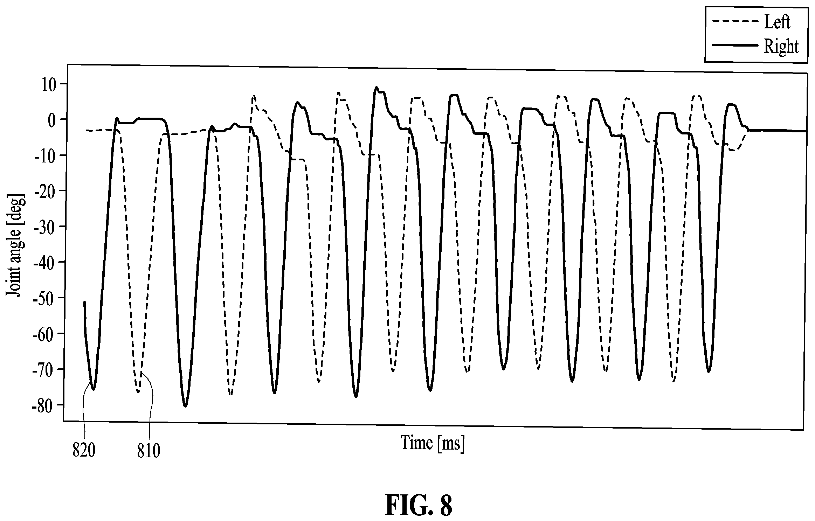

FIG. 8 shows an example of angle values 810 of the left hip joint and angle values 820 of the right hip joint when the user 101 performs a walking-in-place exercise. In the example shown in FIG. 8, both legs may cross when the both hip joint angles are, for example, near "0" degrees, when the user 101 performs a walking-in-place exercise. As described above, the processor 310 of the wearable device 120 may determine that the user 101 is performing a walking-in-place exercise when the angle value of the hip joint angle at the cross timepoint is distributed adjacent to "0" degrees (e.g., when the angle value of the hip joint angle at the cross timepoint is within the first angle range). The processor 310 may determine that the user 101 is not performing a walking-in-place exercise when the angle value of the hip joint angle at the cross timepoint is not distributed adjacent to "0" degrees (e.g., when the angle value of the hip joint angle at the cross timepoint is out of the first angle range).

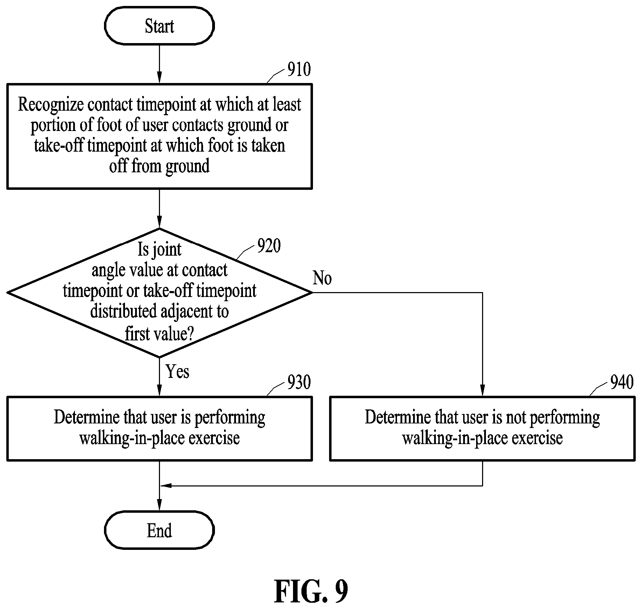

FIGS. 9 to 11 are diagrams illustrating another example of determining whether a user is performing a walking-in-place exercise by a wearable device according to an embodiment.

Operations 910 to 940 of FIG. 9 may be included in operation 530.

Referring to FIG. 9, in operation 910, the wearable device 120 may recognize a contact timepoint at which at least a portion of a foot of the user 101 contacts the ground or a take-off timepoint at which the foot is taken off from the ground. According to an embodiment, the processor 310 of the wearable device 120 may receive acceleration information (e.g., x-axis acceleration values, y-axis acceleration values, and z-axis acceleration values) of the user 101 from the IMU 360, and recognize a contact timepoint (e.g., a heel-strike timepoint) and/or the take-off timepoint (e.g., a toe-off timepoint) through at least a portion (e.g., the z-axis acceleration values) of the received acceleration information or all of the received acceleration information. For example, the processor 310 may recognize the contact timepoint (e.g., the heel-strike timepoint) and/or the take-off timepoint (e.g., the toe-off timepoint) through peak values of the z-axis acceleration values. The heel-strike timepoint may be a timepoint at which the heel of the user 101 contacts the ground, and the toe-off timepoint may be a timepoint when the toe of the user 101 is taken off from the ground.

In operation 920, the wearable device 120 may determine whether the joint angle value at the contact timepoint or the take-off timepoint is distributed adjacent to the first value (e.g., "0" degrees). For example, the wearable device 120 (e.g., the processor 310) may determine whether the joint angle value (e.g., the angle value of the hip j oint) at the contact timepoint or the take-off timepoint is within a second angle range (e.g., "-10" degrees to "+10" degrees). The second angle range is not limited to the range of "-10" degrees to "+10" degrees and may be adjusted. The processor 310 may determine that the joint angle value at the contact timepoint or the take-off timepoint is distributed adjacent to the first value when the joint angle value at the contact timepoint or the take-off timepoint is within the second angle range. The processor 310 may determine that the joint angle value at the contact timepoint or the take-off timepoint is not distributed adjacent to the first value when the joint angle value at the contact timepoint or the take-off timepoint is not within the second angle range.

In response to the determination that the joint angle value at the contact timepoint or the take-off timepoint is distributed adjacent to the first value (e.g., "0" degrees) (if YES in operation 920), the wearable device 120 may determine that the user 101 is performing a walking-in-place exercise, in operation 930. In response to the determination that the joint angle value at the contact timepoint or the take-off timepoint is not distributed adjacent to the first value (e.g., "0" degrees) (if NO in operation 920), the wearable device 120 may determine that the user 101 is not performing a walking-in-place exercise, in operation 940.

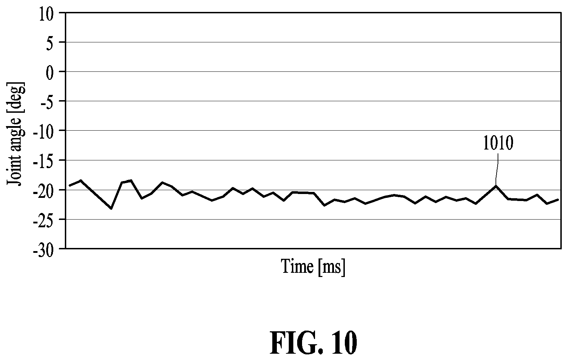

FIG. 10 shows an example of angle values 1010 of a hip joint (e.g., the left hip joint) at a heel-strike timepoint when the user 101 performs a forward-walking exercise. In the example shown in FIG. 10, the angle values 1010 may be distributed in an area where the hip joint angle is less than "-15" degrees (or an area where the forward rotation angle of the hip joint exceeds "15" degrees) when the user 101 performs a forward-walking exercise. For example, a heel strike may occur mainly in an area where the hip joint angle is near "-20" degrees (or an area where the forward rotation angle of the hip joint is around "20" degrees).

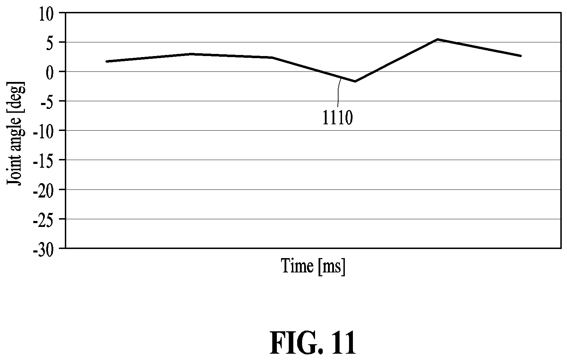

FIG. 11 shows an example of angle values 1110 of a hip joint (e.g., the left hip joint) at a heel-strike timepoint when the user 101 performs a walking-in-place exercise. In the example shown in FIG. 11, the angle values 1110 may be distributed near "0" degrees when the user 101 performs a walking-in-place exercise. Although not shown in FIG. 11, the angle values of the hip joint at the toe-off timepoint may also be distributed near "0" degrees when the user 101 performs a walking-in-place exercise. According to an embodiment, the processor 310 of the wearable device 120 may determine that the user 101 is performing a walking-in-place exercise when the angle value of the hip joint angle at the contact timepoint (e.g., the heel-strike timepoint) or the take-off timepoint (e.g., the toe-off timepoint) is distributed adjacent to "0" degrees (e.g., when the angle value of the hip joint angle at the contact timepoint or the take-off timepoint is within the second angle range). The processor 310 may determine that the user 101 is not performing a walking-in-place exercise when the angle value of the hip joint angle at the contact timepoint (e.g., the heel-strike timepoint) or the take-off timepoint (e.g., the toe-off timepoint) is not distributed adjacent to "0" degrees (e.g., when the angle value of the hip joint angle at the contact timepoint or the take-off timepoint is out of the second angle range).

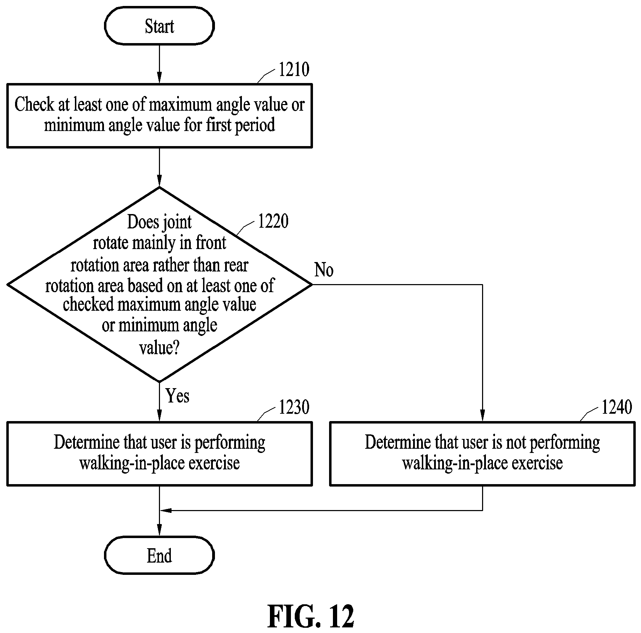

FIG. 12 to 13B are diagrams illustrating another example of determining whether a user is performing a walking-in-place exercise by a wearable device according to an embodiment.

Operations 1210 to 1240 of FIG. 12 may be included in operation 530.

Referring to FIG. 12, in operation 1210, the wearable device 120 (e.g., the processor 310) may check at least one of the maximum angle value or the minimum or small angle value of a joint (e.g., a hip joint, a knee joint, etc.) for a first period. The first period may be, for example, a time (or a one-stride time) from a timepoint when a first foot of the user 101 contacts the ground to a timepoint when the first foot of the user 101 contacts the ground again. Embodiments are not limited thereto, and as another example, the first period may be a time (or a one-step time) from a timepoint when the first foot of the user 101 contacts the ground to a timepoint when a second foot of the user 101 contacts the ground. As still another example, the first period may be an arbitrarily set (or determined) time.

In operation 1220, the wearable device 120 (e.g., the processor 310) may determine whether a joint (e.g., the hip j oint, the knee j oint, etc.) rotates mainly in a front rotation area rather than a rear rotation area based on at least one of the checked maximum angle value or minimum angle value. The wearable device 120 (e.g., the processor 310) may determine that the joint rotates mainly in the front rotation area rather than the rear rotation area, when any one of the checked maximum angle value or minimum angle value is distributed adjacent to a first value (e.g., "0" degrees) (e.g., is within a third angle range (e.g., "-10" degrees to "+10" degrees) and/or when the other one of the checked maximum angle value and minimum angle value is distributed in the front rotation area of the joint.

In an embodiment, the front rotation area where the joint rotates forward from the reference line 105 may be a minus (-) angle area, and the rear rotation area where the joint rotates backward from the reference line 105 may be a plus (+) angle area. The processor 310 may check the maximum angle value and the minimum angle value for the first period, for example, to be "10" degrees and "-60" degrees, respectively. The processor 310 may determine that the maximum angle value (e.g., "10" degrees) is within the third angle range, and determine that the minimum angle value (e.g., "-60" degrees) is distributed in the front rotation area of the joint. In this case, the processor 310 may determine that the joint rotates mainly in the front rotation area rather than the rear rotation area. As another example, the processor 310 may check the maximum angle value and the minimum angle value for the first period, for example, to be "30" degrees and "-40" degrees, respectively. The processor 310 may determine that the minimum angle value (e.g., "-40" degrees) is distributed in the front rotation area of the joint, but the maximum angle value (e.g., "30" degrees) is out of the third angle range. In this case, the processor 310 may determine that the joint does not rotate mainly in the front rotation area rather than the rear rotation area.

In another embodiment, the front rotation area where the joint rotates forward from the reference line 105 may be a plus (+) angle area, and the rear rotation area where the joint rotates backward from the reference line 105 may be a minus (-) angle area. The processor 310 may check the maximum angle value and the minimum angle value for the first period, for example, to be "50" degrees and "-10" degrees, respectively. The processor 310 may determine that the minimum angle value (e.g., "-10" degrees) is within the third angle range, and determine that the maximum angle value (e.g., "50" degrees) is distributed in the front rotation area of the joint. In this case, the processor 310 may determine that the joint rotates mainly in the front rotation area rather than the rear rotation area. As another example, the processor 310 may check the maximum angle value and the minimum angle value for the first period, for example, to be "35" degrees and "-30" degrees, respectively. The processor 310 may determine that the maximum angle value (e.g., "35" degrees) is distributed in the front rotation area of the joint, but the minimum angle value (e.g., "-30" degrees) is out of the third angle range. In this case, the processor 310 may determine that the joint does not rotate mainly in the front rotation area rather than the rear rotation area.

Depending on the implementation, the processor 310 may determine whether a cross timepoint occurs periodically. When the user 101 performs an exercise including a motion of bending both legs simultaneously, the joint may rotate mainly in the front rotation area rather than the rear rotation area, but the cross timepoint may not occur periodically. The processor 310 may perform operation 1220 when the cross timepoint occurs periodically.

In response to the determination that the joint rotates mainly in the front rotation area (if YES in operation 1220), the wearable device 120 (e.g., the processor 310) may determine that the user 101 is performing a walking-in-place exercise, in operation 1230. In response to the determination that the joint does not rotate mainly in the front rotation area (if NO in operation 1220), the wearable device 120 (e.g., the processor 310) may determine that the user 101 is not performing a walking-in-place exercise, in operation 1240.

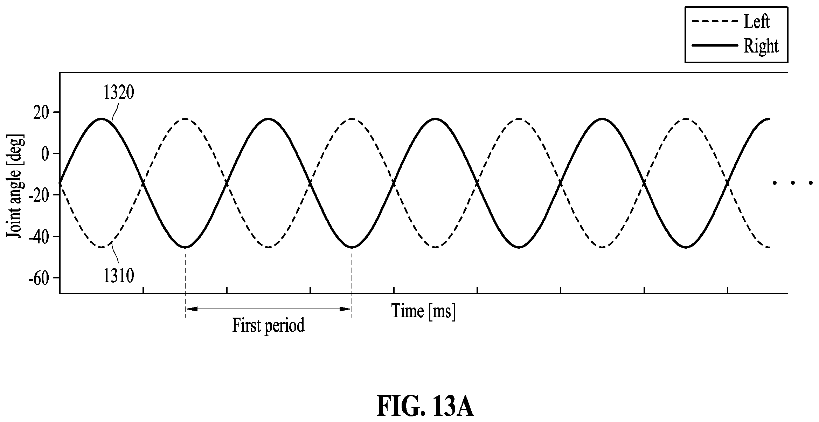

FIG. 13A shows an example of angle values 1310 of the left hip joint and angle values 1320 of the right hip joint when the user 101 performs a forward-walking exercise. In the example shown in FIG. 13A, a front rotation area may be a minus (-) angle area, and a rear rotation area may be a plus (+) angle area. In the example shown in FIG. 13A, the maximum angle value and minimum angle value of one hip joint for a first period may be, for example, "+18" degrees and "-45" degrees, respectively.

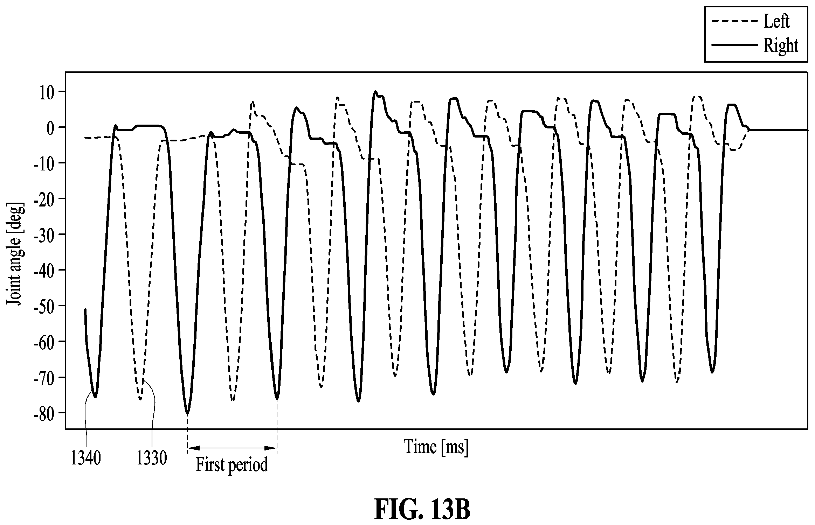

FIG. 13B shows an example of angle values 1330 of the left hip joint and angle values 1340 of the right hip joint when the user 101 performs a walking-in-place exercise. In the example shown in FIG. 13B, a front rotation area may be a minus (-) angle area, and a rear rotation area may be a plus (+) angle area. In the example shown in FIG. 13B, the maximum angle value and minimum angle value of one hip joint for a first period may be, for example, "+8" degrees and "-72" degrees, respectively. In the example shown in FIG. 13B, the processor 310 may determine whether one of the maximum angle value and the minimum angle value for the first period is within the third angle range and whether the other one of the maximum angle value and the minimum angle value is distributed in the front rotation area of the hip j oint. Since the maximum angle value (e.g., "8" degrees) for the first period is within the third angle range and the minimum angle value (e.g., "-72" degrees) for the first period is distributed in the front rotation area of the hip joint, the processor 310 may determine that the user 101 is performing a walking-in-place exercise. Depending on the implementation, the processor 310 may determine whether a cross timepoint occurs periodically. The processor 310 may determine whether one of the maximum angle value and the minimum angle value for the first period is within the third angle range and whether the other one of the maximum angle value and the minimum angle value is distributed in the front rotation area of the hip j oint, when the cross timepoint occurs periodically.

According to an embodiment, in the example shown in FIG. 13B, the processor 310 may determine whether the minimum angle value (e.g., "-72" degrees) for the first period is less than or equal to a first threshold angle value (e.g., "-60" degrees), and determine whether the maximum angle value (e.g., "+8" degrees) for the first period is less than or equal to a second threshold angle value (e.g., "10" degrees). The first threshold angle value and the second threshold angle value are not limited to the examples described above. In response to the determination that the minimum angle value (e.g., "-72" degrees) and the maximum angle value (e.g., "+8" degrees) for the first period is less than or equal to the first threshold angle value (e.g., "-60" degrees) and the second threshold angle value (e.g., "10" degrees), respectively, the processor 310 may determine that the user 101 is performing a walking-in-place exercise. When the minimum angle value for the first period exceeds the first threshold angle value (e.g., "-60" degrees) and/or the maximum angle value for the first period exceeds the second threshold angle value (e.g., "10" degrees), the processor 310 may determine that the user 101 is not performing a walking-in-place exercise.

According to an embodiment, the processor 310 may calculate a difference value between the maximum angle value and the minimum angle value, and determine whether the calculated difference value exceeds a predetermined level (e.g., "70" degrees). When the calculated difference value (e.g., +8-(-72)= "80" degrees) exceeds the predetermined level (e.g., "70" degrees), the processor 310 may determine that the user 101 is performing a walking-in-place exercise. When the calculated difference value does not exceed the predetermined level (e.g., "70" degrees), the processor 310 may determine that the user 101 is not performing a walking-in-place exercise.

Unlike the example shown in FIG. 13B, the front rotation area may be a plus (+) angle area, and the rear rotation area may be a minus (-) angle area. The maximum angle value and minimum angle value of one hip joint for the first period may be, for example, "+72" degrees and "-8" degrees, respectively.

When the front rotation area is a plus (+) angle area and the rear rotation area is a minus (-) angle area, according to an embodiment, the processor 310 may determine whether any one of the maximum angle value and the minimum angle value for the first period is within the third angle range and whether the other one of the maximum angle value and the minimum angle value is distributed in the front rotation area of the hip joint. Since the minimum angle value (e.g., "-8" degrees) for the first period is within the third angle range and the maximum angle value (e.g., "-2" degrees) for the first period is distributed in the front rotation area of the hip joint, the processor 310 may determine that the user 101 is performing a walking-in-place exercise.

When the front rotation area is a plus (+) angle area and the rear rotation area is a minus (-) angle area, according to an embodiment, the processor 310 may determine whether the maximum angle value (e.g., "72" degrees) for the first period is greater or equal to a third threshold angle value (e.g., "60" degrees), and determine whether the minimum angle value (e.g., "-8" degrees) for the first period is greater than or equal to a fourth threshold angle value (e.g., "-10" degrees). The third threshold angle value and the fourth threshold angle value are not limited to the examples described above. In response to the determination that the maximum angle value (e.g., "72" degrees) and the minimum angle value (e.g., "-8" degrees) for the first period are greater than or equal to the third threshold angle value (e.g., "60" degrees) and the fourth threshold angle value (e.g., "-10" degrees), respectively, the processor 310 may determine that the user 101 is performing a walking-in-place exercise. When the maximum angle value for the first period is less than the third threshold angle value and/or the minimum angle value for the first period is less than the fourth threshold angle value, the processor 310 may determine that the user 101 is not performing a walking-in-place exercise.

When the front rotation area is a plus (+) angle area and the rear rotation area is a minus (-) angle area, according to an embodiment, the processor 310 may calculate a difference value between the maximum angle value (e.g., "72" degrees) and the minimum angle value (e.g., "-8" degrees), and determine whether the calculated difference value exceeds a predetermined level (e.g., "70" degrees). When the calculated difference value (e.g., 72-(-8)= "80" degrees) exceeds the predetermined level (e.g., "70" degrees), the processor 310 may determine that the user 101 is performing a walking-in-place exercise. When the calculated difference value does not exceed the predetermined level (e.g., "70" degrees), the processor 310 may determine that the user 101 is not performing a walking-in-place exercise.

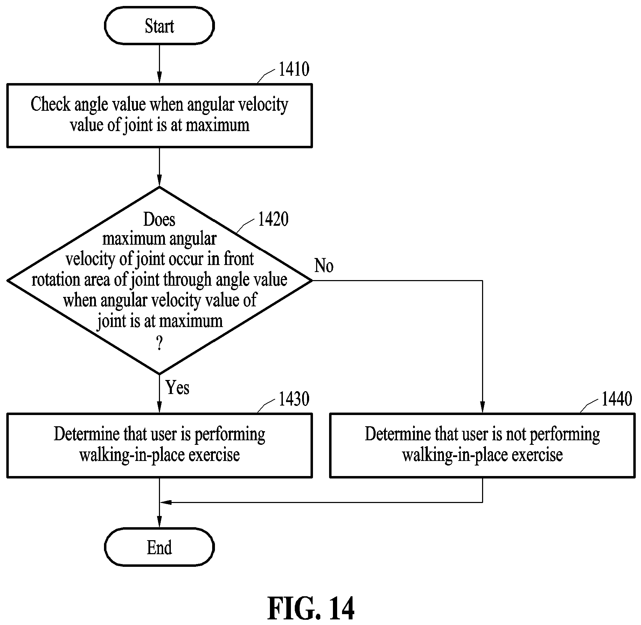

FIGS. 14 to 16 are diagrams illustrating another example of determining whether a user is performing a walking-in-place exercise by a wearable device according to an embodiment.

Operations 1410 to 1440 of FIG. 14 may be included in operation 530.

Referring to FIG. 14, in operation 1410, the wearable device 120 may check the angle value when the angular velocity value of a joint (e.g., a hip joint or a knee joint) is at maximum. For example, the at least one processor 310 may receive angle values of a first joint (e.g., the left hip joint or the left knee j oint) from the angle sensor 320, and calculate angular velocity values of the first joint based on the angle values of the first joint. The processor 310 may check the angle value of the first joint at the maximum angular velocity value of the first j oint. The processor 310 may receive angle values of a second joint (e.g., the right hip joint or the right knee joint) from the angle sensor 320-1, and calculate angular velocity values of the second joint based on the angle values of the second joint. The processor 310 may check the angle value of the second joint at the maximum angular velocity value of the second joint.

In operation 1420, the wearable device 120 may determine whether the maximum angular velocity of the joint occurs in a front rotation area of the joint (or a front rotation area deviating from a third angle) through the angle value when the angular velocity value of the joint (e.g., the first joint and/or the second j oint) is at maximum. In response to the determination that the maximum angular velocity of the joint occurs in the front rotation area of the joint (or the front rotation area deviating from the third angle) (if YES in operation 1420), the wearable device 120 may determine that the user 101 is performing a walking-in-place exercise, in operation 1430. In response to the determination that the maximum angular velocity of the joint does not occur in the front rotation area of the joint (or the front rotation area deviating from the third angle) (if NO in operation 1420), the wearable device 120 may determine that the user 101 is not performing a walking-in-place exercise, in operation 1440.

According to an embodiment, the processor 310 may determine whether a cross timepoint occurs periodically. When the user 101 performs an exercise including a motion of bending both legs simultaneously, the maximum angular velocity of the joint may occur in the front rotation area of the joint (or the front rotation area deviating from the third angle), but the cross timepoint may not occur periodically. The processor 310 may perform operation 1420 when the cross timepoint occurs periodically.

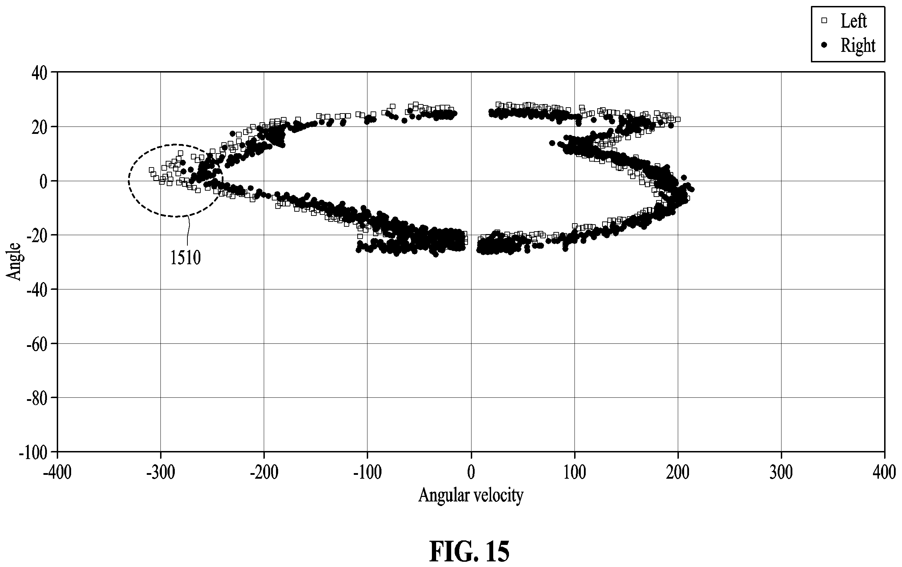

FIG. 15 shows an example of a scatter plot of angles and angular velocities of hip joints when the user 101 performs a forward-walking exercise. In the example shown in FIG. 15, a front rotation area may be a minus (-) angle area, and a rear rotation area may be a plus (+) angle area. In an area 1510 of FIG. 15, the angular velocity of a hip joint may be at maximum. In the example shown in FIG. 15, the angle value of the hip joint may be near "0" degrees when the angular velocity of the hip joint is at maximum.

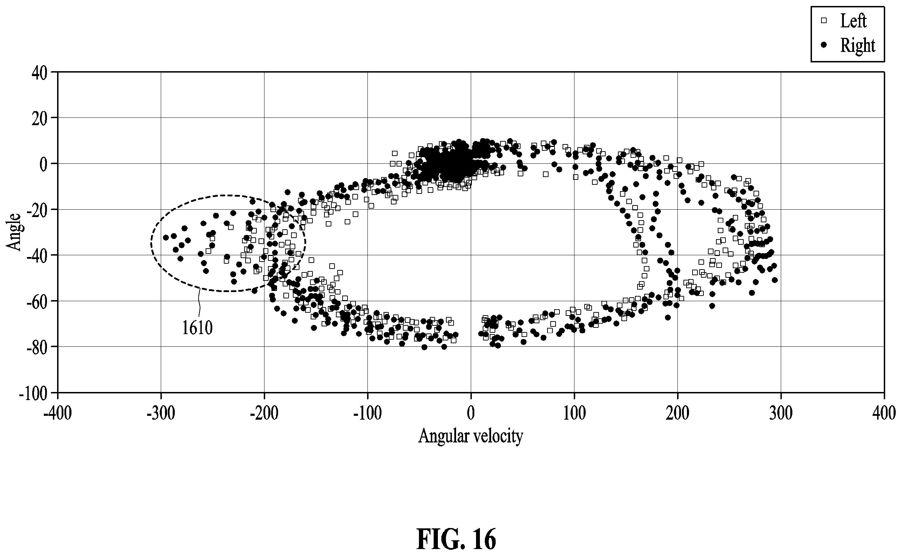

FIG. 16 shows an example of a scatter plot of angles and angular velocities of hip joints when the user 101 performs a walking-in-place exercise. In the example shown in FIG. 16, a front rotation area may be a minus (-) angle area, and a rear rotation area may be a plus (+) angle area. In an area 1610 of FIG. 16, the angular velocity of a hip joint may be at maximum. In the example shown in FIG. 16, the angle value of the hip joint may be near "-40" degrees when the angular velocity of the hip joint is at maximum. The processor 310 may determine that the maximum angular velocity of the joint occurs in a front rotation area of the joint (or a front rotation area deviating from a third angle (e.g., "-30" degrees)) through the angle value (e.g., about "-40" degrees) of the hip joint when the angular velocity value of the hip joint is at maximum. In other words, the processor 310 may recognize that the angle value (e.g., about "-40" degrees) of the hip joint is distributed in the front rotation area deviating from the third angle (e.g., "-30" degrees) when the angular velocity value of the hip joint is at maximum. The front rotation area deviating from the third angle (e.g., "-30" degrees) may correspond to, for example, an area below the third angle, and the third angle is not limited to "-30" degrees. The processor 310 may determine that the angle value (e.g., about "-40" degrees) of the hip joint is smaller than the third angle (e.g., "-30" degrees) when the angular velocity value of the hip joint is at maximum. In this case, the processor 310 may determine that the user 101 is performing a walking-in-place exercise.

Unlike the example shown in FIG. 16, the angle value of the hip joint when the angular velocity value of the hip joint is at maximum may be, for example, "-10" degrees. The processor 310 may determine that the maximum angular velocity of the joint does not occur in an area deviating from the third angle (e.g., "-30" degrees) through the angle value (e.g., "-10" degrees) of the hip joint when the angular velocity value of the hip joint is at maximum. The processor 310 may determine that the angle value (e.g., "-10" degrees) of the hip joint is greater than the third angle (e.g., "-30" degrees) when the angular velocity value of the hip joint is at maximum. In this case, the processor 310 may determine that the user 101 is not performing a walking-in-place exercise.

Depending on the implementation, the processor 310 may determine whether a cross timepoint occurs periodically. When the cross timepoint occurs periodically, the processor 310 may determine that the maximum angular velocity of the joint occurs in the front rotation area of the joint (e.g., the area below the third angle) through the angle value of the hip joint when the angular velocity value of the hip joint is at maximum.

According to an embodiment, the processor 310 may determine whether the angle value is less than the third angle (e.g., "-30" degrees) when the angular velocity value of the joint is at maximum. When the angle value (e.g., "-40" degrees) when the angular velocity value of the joint is at maximum is less than the third angle (e.g., "-30" degrees), the processor 310 may determine that the user 101 is performing a walking-in-place exercise. When the angle value when the angular velocity value of the joint is at maximum is greater than or equal to the third angle (e.g., "-30" degrees), the processor 310 may determine that the user 101 is not performing a walking-in-place exercise.

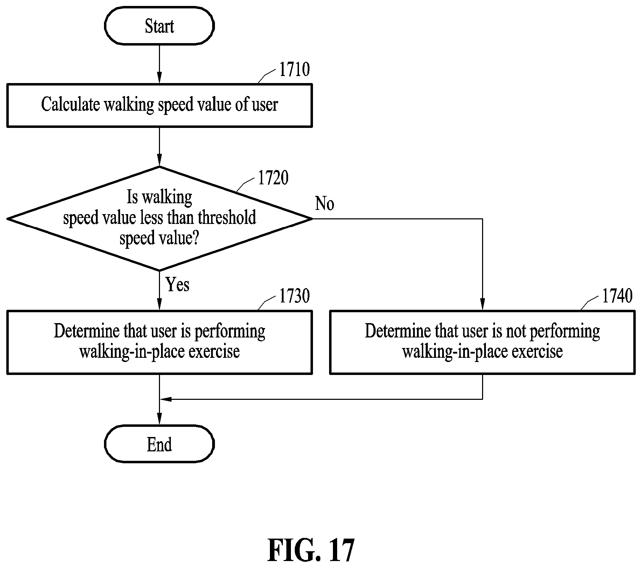

FIGS. 17 to 19 are diagrams illustrating another example of determining whether a user is performing a walking-in-place exercise by a wearable device according to an embodiment.

Operations 1710 to 1740 of FIG. 17 may be included in operation 530.

Referring to FIG. 17, in operation 1710, the wearable device 120 may calculate (or determine) a walking speed value of the user 101. For example, the processor 310 may calculate the walking speed value of the user 101 using at least one of angle values received from an angle sensor (e.g., the angle sensor 320 and/or the angle sensor 320-1) or acceleration information received from the IMU 360.

In operation 1720, the wearable device 120 may determine whether the walking speed value of the user 101 is less than a threshold speed value (e.g., "1" kilometer per hour (km/h)). The threshold speed value is not limited to "1" km/h. In response to the determination that the walking speed value of the user 101 is less than the threshold speed value (if YES in operation 1720), the wearable device 120 may determine that the user 101 is performing a walking-in-place exercise, in operation 1730. In response to the determination that the walking speed value of the user 101 is greater than or equal to the threshold speed value (if NO in operation 1720), the wearable device 120 may determine that the user 101 is not performing a walking-in-place exercise, in operation 1740.

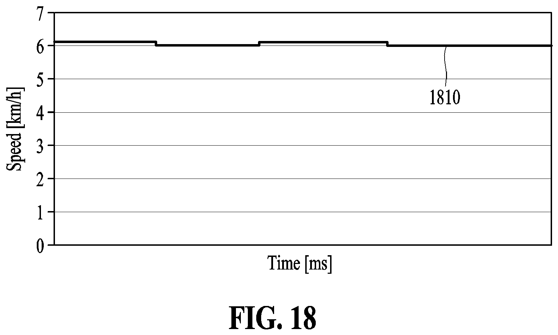

FIG. 18 shows an example of a graph 1810 of a walking speed over time when the user 101 performs a forward-walking exercise. In the example shown in FIG. 18, the walking speed value of the user 101 may be "6" km/h on average. When the user 101 performs a forward-walking exercise at a low speed, the walking speed value may be, for example, "3" to "4" km/h.

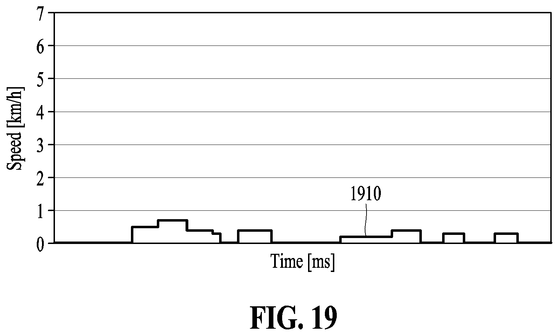

FIG. 19 shows an example of a graph 1910 of a walking speed over time when the user 101 performs a walking-in-place exercise. In the example shown in FIG. 19, the walking speed value of the user 101 may be close to "0". In the example shown in FIG. 19, the processor 310 of the wearable device 120 may determine that the walking speed value of the user 101 is less than the threshold speed value (e.g., "1" km/h), and determine that the user 101 is performing a walking-in-place exercise.

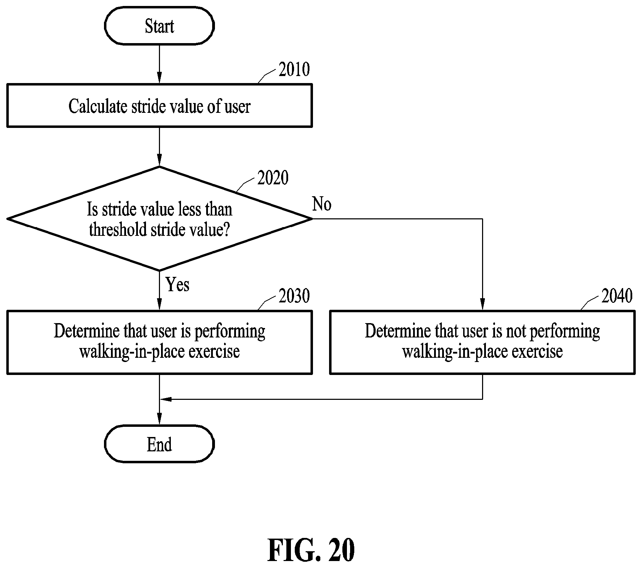

FIGS. 20 to 22 are diagrams illustrating another example of determining whether a user is performing a walking-in-place exercise by a wearable device according to an embodiment.

Operations 2010 to 2040 of FIG. 20 may be included in operation 530.

Referring to FIG. 20, in operation 2010, the wearable device 120 may calculate (or determine) a stride value of the user 101. For example, the processor 310 of the wearable device 120 may calculate the stride value of the user 101 using at least one of angle values received from an angle sensor (e.g., the angle sensor 320 and/or the angle sensor 320-1) or acceleration information received from the IMU 360.

In operation 2020, the wearable device 120 may determine whether the stride value of the user 101 is less than a threshold stride value (e.g., "25" centimeters (cm)). The threshold stride value is not limited to "25" cm. In response to the determination that the stride value of the user 101 is less than the threshold stride value (if YES in operation 2020), the wearable device 120 may determine that the user 101 is performing a walking-in-place exercise, in operation 2030. In response to the determination that the stride value of the user 101 is greater than or equal to the threshold stride value (if NO in operation 2020), the wearable device 120 may determine that the user 101 is not performing a walking-in-place exercise, in operation 2040.

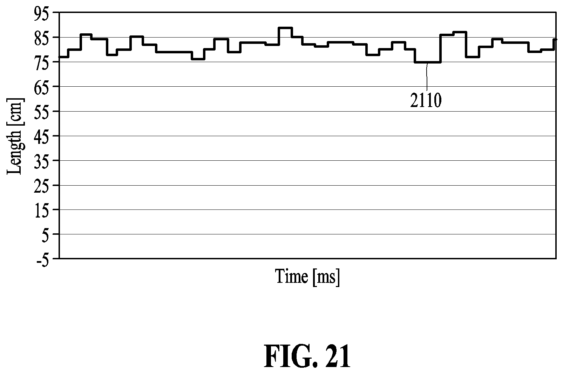

FIG. 21 shows an example of a graph 2110 of a stride over time when the user 101 performs a forward-walking exercise. In the example shown in FIG. 21, the stride value of the user 101 may be distributed between "75" cm and "85" cm.

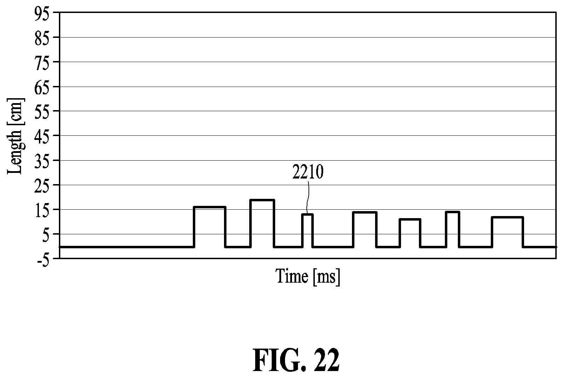

FIG. 22 shows an example of a graph 2210 of a stride over time when the user 101 performs a walking-in-place exercise. In the example shown in FIG. 22, the stride value of the user 101 may be close to "0". In the example shown in FIG. 22, the processor 310 of the wearable device 120 may determine that the stride value of the user 101 is less than the threshold stride value (e.g., "25" cm), and determine that the user 101 is performing a walking-in-place exercise.

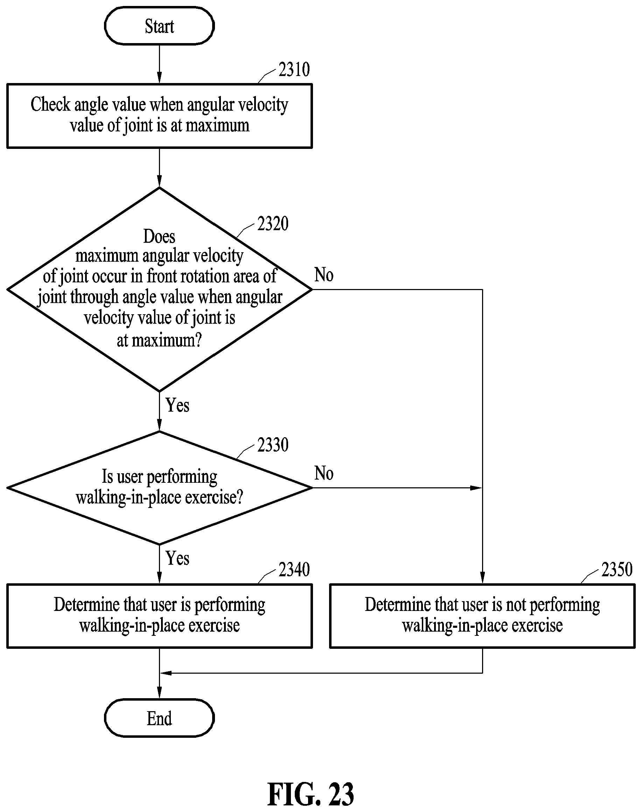

FIG. 23 is a flowchart illustrating another example of determining whether a user is performing a walking-in-place exercise by a wearable device according to an embodiment.

Operations 2310 to 2350 of FIG. 23 may be included in operation 530.

Referring to FIG. 23, in operation 2310, the wearable device 120 may check the angle value when the angular velocity value of a joint (e.g., a hip joint or a knee joint) is at maximum. For example, the processor 310 may receive angle values of a first joint (e.g., the left hip joint or the left knee joint) from the angle sensor 320, and calculate angular velocity values of the first joint based on the angle values of the first joint. The processor 310 may check the angle value of the first joint at the maximum angular velocity value of the first joint. The processor 310 may receive angle values of a second joint (e.g., the right hip joint or the right knee joint) from the angle sensor 320-1, and calculate angular velocity values of the second joint based on the angle values of the second j oint. The processor 310 may check the angle value of the second joint at the maximum angular velocity value of the second joint.

In operation 2320, the wearable device 120 may determine whether the maximum angular velocity of the joint occurs in a front rotation area of the joint (or a front rotation area deviating from a third angle) through the angle value when the angular velocity value of the joint (e.g., the first joint and/or the second j oint) is at maximum. Operation 1420 may apply to operation 2320.

In response to the determination that the maximum angular velocity of the joint does not occur in the front rotation area of the joint (or does not occur in the front rotation area deviating from the third angle) (if NO in operation 2320), the wearable device 120 may determine that the user 101 is not performing a walking-in-place exercise, in operation 2350.

In response to the determination that the maximum angular velocity of the joint occurs in the front rotation area of the joint (or the front rotation area deviating from the third angle) (if YES in operation 2320), the wearable device 120 may determine whether the user 101 is performing a walking-in-place exercise based on at least one of the angle value at a cross timepoint at which both legs of the user 101 cross, the angle value at a contact timepoint at which at least a portion of a foot of the user 101 contacts the ground or a take-off timepoint at which the foot of the user 101 is taken off from the ground, the maximum angle value and the minimum angle value of the joint (e.g., the first joint and/or the second j oint) for a first period, or a walking index value (e.g., a walking speed value and/or a stride value) of the user 101, in operation 2330.

For example, in operation 2330, as described with reference to FIGS. 6 to 8, the processor 310 may determine whether the joint angle value (e.g., the angle value of the hip joint) at the cross timepoint is distributed adjacent to a first value (e.g., "0") (or whether the joint angle value at the cross timepoint is within a first angle range). If "yes" in 2330, then the process may proceed to 2340, but if "no" in 2330, then the process may proceed to 2350.

For example, in operation 2330, as described with reference to FIGS. 9 to 11, the processor 310 may determine whether the joint angle value at the contact timepoint or the take-off timepoint is distributed adjacent to the first value (e.g., "0") (or whether the joint angle value at the contact timepoint or the take-off timepoint is within a second angle range).

For example, in operation 2330, as described with reference to FIGS. 12 to 13B, the processor 310 may determine whether the joint rotates mainly in a front rotation area rather than a rear rotation area based on the maximum angle value and the minimum angle value for the first period.

For example, in operation 2330, as described with reference to FIGS. 17 to 19, the processor 310 may determine whether the walking speed value of the user 101 is less than a threshold speed value (e.g., "1" km/h).

For example, in operation 2330, as described with reference to FIGS. 20 to 22, the processor 310 may determine whether the stride value of the user 101 is less than a threshold stride value (e.g., "25" cm).

When at least one of the case where the joint angle value at the cross timepoint is distributed adj acent to the first value, the case where the joint angle value at the contact timepoint or the take-off timepoint is distributed adjacent to the first value, the case where the joint rotates forward more than a first angle and the joint rotates backward less than a second angle based on the maximum angle value and the minimum angle value for the first period, the case where the walking speed value of the user 101 is less than the threshold speed value, or the case where the stride value of the user 101 is less than the threshold stride value occurs, the wearable device 120 may determine that the user 101 is performing a walking-in-place exercise, in operation 2340.

The embodiments described with reference to FIGS. 1 to 22 may apply to the embodiments of FIG. 23.

FIGS. 24 to 26 are diagrams illustrating an example of a method of providing a torque to a walking-in-place exercise of a user by a wearable device according to an embodiment.

Operations 2410 to 2440 of FIG. 24 may be included in operation 540.

Referring to FIG. 24, in operation 2410, the wearable device 120 (e.g., the processor 310) may check an exercise intensity of the user 101. For example, in response to the determination that the user 101 is performing a walking-in-place exercise, the processor 310 may request the user 101 to set the exercise intensity for a walking-in-place exercise through the electronic device 110 and/or the other wearable device 130. The user 101 may set (or input) a level value of the exercise intensity of the walking-in-place exercise into the electronic device 110 and/or the other wearable device 130, and the electronic device 110 and/or the other wearable device 130 may transmit the level value set by the user 101 to the wearable device 120. The wearable device 120 may check the exercise intensity of the walking-in-place exercise of the user 101 through the level value received from the electronic device 110 and/or the other wearable device 130. As another example, in response to the determination that the user 101 is performing a walking-in-place exercise, the processor 310 may determine a level value of an exercise intensity of a target exercise of the user 101 to be the level value of the exercise intensity of the walking-in-place exercise. In this case, the processor 310 may check the exercise intensity of the walking-in-place exercise of the user 101 without requesting the user 101 to set the exercise intensity of the walking-in-place exercise.

In operation 2420, the wearable device 120 (e.g., the processor 310) may determine a first torque ratio value for a first motion of the user 101 and a second torque ratio value for a second motion of the user 101 based on the exercise intensity (e.g., the level value of the exercise intensity of the walking-in-place exercise) of the user 101. The first motion may be, for example, a motion of raising a leg of the user 101 (or a flexion), and the second motion may be, for example, a motion of placing a leg of the user 101 down (or an extension). The processor 310 may determine the first torque ratio value and the second torque ratio value so that a torque of an adjusted magnitude may be provided to the user 101 while the user 101 is performing a walking-in-place exercise. The first torque ratio value and the second torque ratio value may be, for example, different.

According to an embodiment, the first torque ratio value may be, for example, a numerical value of the ratio indicating how much the magnitude of the torque needs to be adjusted (e.g., increased) in the first motion (or the flexion) during a walking-in-place exercise, compared to the first motion during a forward-walking exercise. The first torque ratio value may be, for example, a numerical value of the ratio at which the magnitude of the torque is adjusted (e.g., increased) in the first motion of the walking-in-place exercise. When the magnitude of the torque in the first motion of the walking-in-place exercise needs to be, for example, "1.2" times (or increased by 20%) of that in the first motion of the forward-walking exercise, the first torque ratio value may be "1.2". Depending on the implementation, the first torque ratio value may be "1".

According to an embodiment, the second torque ratio value may be, for example, a numerical value of the ratio indicating how much the magnitude of the torque needs to be adjusted (e.g., decreased) in the second motion (or the extension) during a walking-in-place exercise, compared to the second motion during a forward-walking exercise. The second torque ratio value may be, for example, a numerical value of the ratio at which the magnitude of the torque is adjusted (e.g., decreased) in the second motion of the walking-in-place exercise. When the magnitude of the torque in the second motion of the walking-in-place exercise needs to be, for example, "0.6" times (or decreased by 40%) of that in the second motion of the forward-walking exercise, the second torque ratio value may be "0.6".

According to an embodiment, the processor 310 may determine the first torque ratio value and the second torque ratio value according to the level value of the exercise intensity.

For example, the memory 350 (e.g., see Fig. 3A and/or 3B) of the wearable device 120 may store a table in which a plurality of first torque ratio values and a plurality of second torque ratio values are mapped with several level values of the exercise intensity. Table 1 below shows an example of the table.

**[Table 1]**

| Exercise intensity (e.g., exercise intensity in assistance mode or resistance mode) | First torque ratio value | Second torque ratio value |
|---|---|---|
| Level value=1 | ratio 1a | ratio 2a |
| Level value=2 | ratio 1b | ratio 2b |
| Level value=3 | ratio 1c | ratio 2c |
| Level value=4 | ratio 1d | ratio 2d |
| Level value=5 | ratio 1e | ratio 2e |

For example, when the level value of the exercise intensity of the user 101 is "2", the processor 310 may determine "ratio 1b" to be the first torque ratio value and determine "ratio 2b" to be the second torque ratio value, by referring to the table (e.g., Table 1).

As another example, there may be a first relational expression between the level value of the exercise intensity and the first torque ratio value, and there may be a second relational expression between the level value of the exercise intensity and the second torque ratio value. The processor 310 may determine the first torque ratio value using the level value of the exercise intensity of the user 101 and the first relational expression, and determine the second torque ratio value using the level value of the exercise intensity of the user 101 and the second relational expression.

The operation of determining the first torque ratio value and the second torque ratio value by the processor 310 is not limited to the examples described above. According to an embodiment, the electronic device 110 and/or the other wearable device 130 may determine the first torque ratio value and the second torque ratio value based on the level value of the exercise intensity of the walking-in-place exercise of the user 101, and the wearable device 120 may receive the first torque ratio value and the second torque ratio value from the electronic device 110 and/or the other wearable device 130.

In operation 2430, the wearable device 120 (e.g., the processor 310) may determine, when the user 101 performs the first motion, a first adjusted torque value based on the first torque value and the first torque ratio value, and provide the user 101 (e.g., a leg performing a flexion) with an external force (or a torque) corresponding to the determined first adjusted torque value.

According to an embodiment, the processor 310 may determine the first torque value based on a first difference value of both j oint angles of the user 101 when the user 101 performs the first motion (or the flexion) (e.g., the difference value between the angle value of the left hip joint angle and the angle value of the right hip joint angle during the first motion). For example, the processor 310 may determine the first torque value according to an equation *τ*(*t*) *= κy*(*t* -△ *t*)*.* The processor 310 may determine the first adjusted torque value by multiplying the determined first torque value by the first torque ratio value. The processor 310 may control the driving module 30 to provide the user 101 (e.g., the leg performing the flexion) with an external force (or a torque) corresponding to the determined first adjusted torque value.

In operation 2440, the wearable device 120 (e.g., the processor 310) may determine, when the user 101 performs the second motion, a second adjusted torque value based on the second torque value and the second torque ratio value, and provide the user 101 (e.g., a leg performing an extension) with an external force (or a torque) corresponding to the determined second adjusted torque value.

According to an embodiment, the processor 310 may determine the second torque value based on a second difference value of both joint angles of the user 101 when the user 101 performs the second motion (or the extension) (e.g., the difference value between the angle value of the left hip joint angle and the angle value of the right hip joint angle during the second motion). For example, the processor 310 may determine the second torque value according to an equation *τ*(*t*) *= κy*(*t* -△ *t*)*.* The processor 310 may determine the second adjusted torque value by multiplying the determined second torque value by the second torque ratio value. The processor 310 may control the driving module 30 to provide the user 101 (e.g., the leg performing the extension) with an external force (or a torque) corresponding to the determined second adjusted torque value. Since the second torque ratio value may be smaller than the first torque ratio value, the second adjusted torque value may be smaller than the first adjusted torque value. When the user 101 receives a torque from the wearable device 120 while performing the second motion (or the extension), the user 101 may feel discomfort due to the provided torque. The processor 310 may provide the user 101 with a torque of a lower magnitude when the user 101 performs the second motion (or the extension), thereby minimizing the discomfort that the user 101 may feel when placing the leg down and allowing the user 101 to perform the second motion more naturally.

According to an embodiment, the wearable device 120 may perform a torque control (e.g., operations of FIG. 24) so that a torque suitable for a walking-in-place exercise of a user may be provided when the user performs the walking-in-place exercise in the middle of performing a target exercise.

According to an embodiment, the wearable device 120 (e.g., the processor 310) may determine an exercise speed of the walking-in-place exercise (e.g., a speed at which the leg is raised and placed down) based on at least one of the angle values of a joint angle (e.g., a hip joint angle) while the user is performing the walking-in-place exercise, the angular velocity values of the joint angle, or the number of times of the first motion (and/or the second motion) counted for a predetermined period, and change the first adjusted torque value and/or the second adjusted torque value based on the determined exercise speed.

For example, the processor 310 may determine that the user is performing a walking-in-place exercise at a high speed (at a fast tempo) when the determined exercise speed is faster than a reference speed or when the counted number of times of the first motion (and/or the second motion) exceeds a predetermined number of times. In this case, the processor 310 may multiply the second adjusted torque value by a second adjustment value so that the second adjusted torque value may be almost close to "0", and multiply the first adjusted torque value by a first adjustment value so that the first adjusted torque value may increase more. The first adjustment value may be a value greater than "1", and the second adjustment value may be a value adjacent to, for example, "0". The first adjustment value and the second adjustment value may vary according to the determined exercise speed.

The processor 310 may control the driving module 30 to provide a torque corresponding to the value calculated by multiplying the first adjusted torque value and the first adjustment value (e.g., the first adjusted torque value × the first adjustment value), and control the driving module 30 to provide a torque corresponding to the value calculated by multiplying the second adjusted torque value and the second adjustment value (e.g., the second adjusted torque value × the second adjustment value). The processor 310 may provide a torque of a greater magnitude when the user performs the first motion (or the flexion), and provide a torque of a magnitude close to "0" when the user performs the second motion (or the extension). Accordingly, the processor 310 may perform the torque control according to the high speed of the user.

According to an embodiment, the wearable device 120 may operate in operation 520 when the user stops the walking-in-place exercise and performs a target exercise.

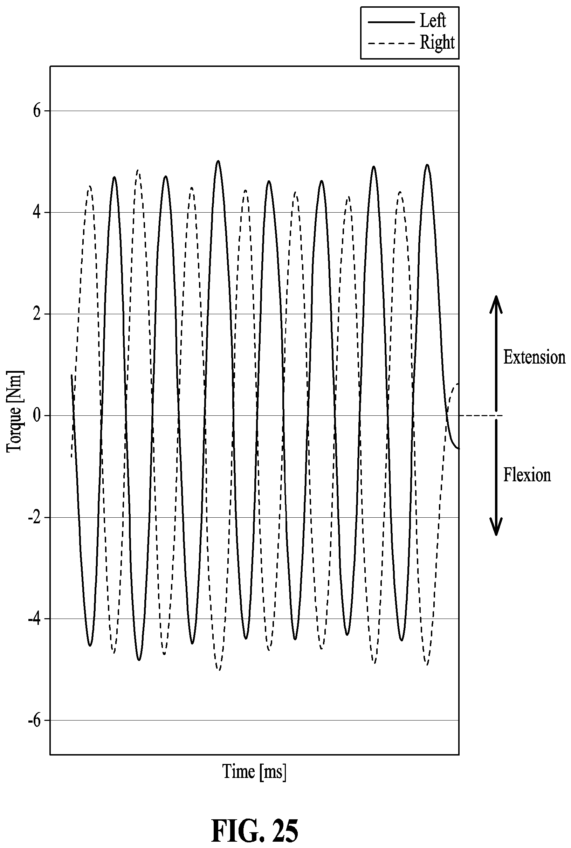

FIG. 25 shows an example of the magnitudes of torques provided to both legs of the user 101, respectively, when the user 101 performs a target exercise (e.g., a forward-walking exercise). In the example shown in FIG. 25, an area in which the torque is greater than or equal to "0" may correspond to, for example, an area in which the user 101 performs a second motion (or an extension), and an area in which the torque is less than or equal to "0" may correspond to, for example, an area in which the user 101 performs a first motion (or a flexion).

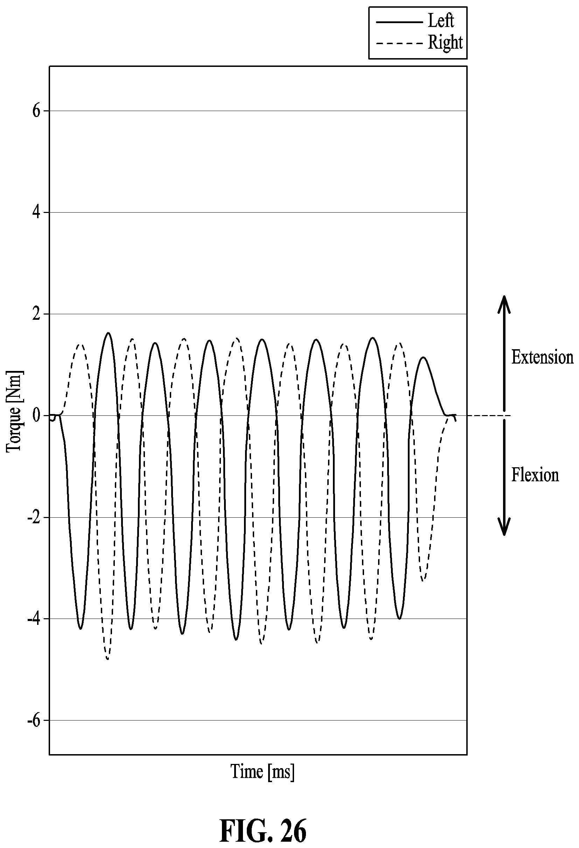

FIG. 26 shows an example of the magnitudes of torques provided to both legs of the user 101, respectively, when the user 101 performs a walking-in-place exercise. In the example shown in FIG. 26, an area in which the magnitude of the torque is greater than or equal to "0" may correspond to, for example, an area in which the user 101 performs a second motion (or an extension), and an area in which the magnitude of the torque is less than or equal to "0" may correspond to, for example, an area in which the user 101 performs a first motion (or a flexion).

In the example shown in FIG. 26, the processor 310 may provide a torque corresponding to a first adjusted torque value determined based on a first torque ratio value and a first torque value during the first motion of the walking-in-place exercise. The processor 310 may provide a torque of a magnitude similar to or greater than the magnitude of the torque provided during the first motion of the forward-walking exercise, during the first motion of the walking-in-place exercise through the first torque ratio value.

In the example shown in FIG. 26, the processor 310 may provide a torque corresponding to a second adjusted torque value determined based on a second torque ratio value and a second torque value during the second motion of the walking-in-place exercise. Accordingly, the magnitude of the torque provided during the second motion of the walking-in-place exercise may be less than the magnitude of the torque provided during the second motion of the forward-walking exercise of FIG. 25. The processor 310 may provide a torque of a magnitude less than the magnitude of the torque provided during the second motion of the forward-walking exercise, during the second motion of the walking-in-place exercise by determining the second torque ratio value to be less than "0".

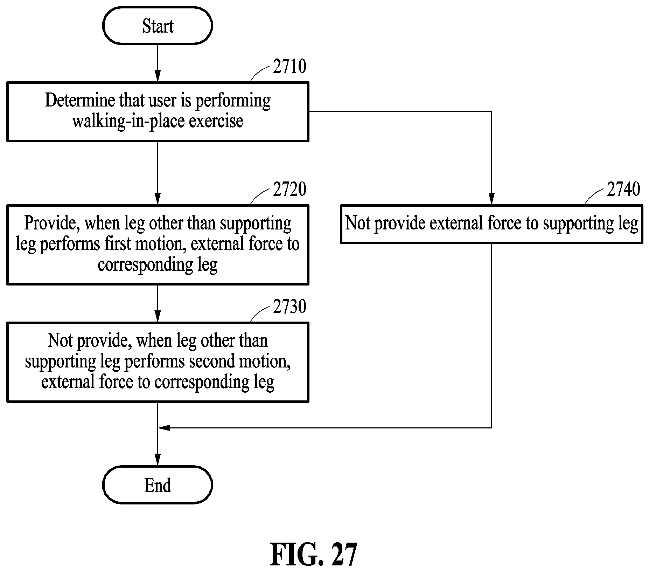

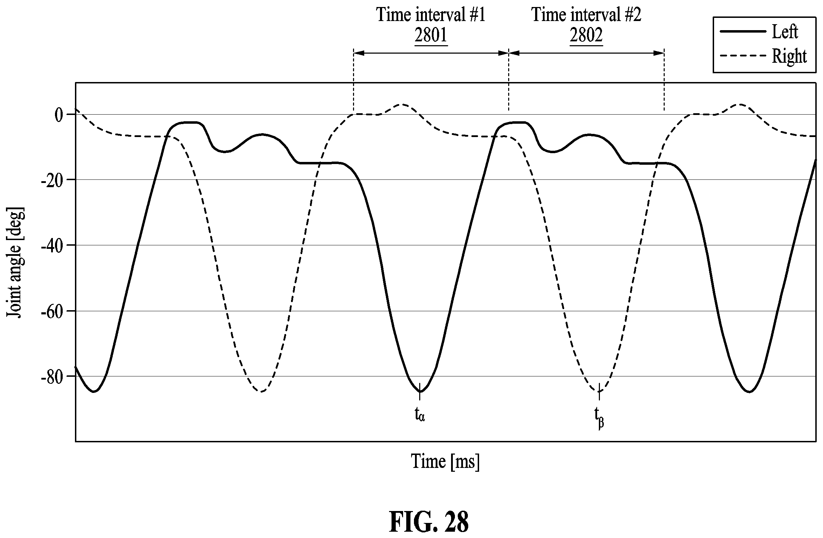

FIGS. 27 and 28 are diagrams illustrating another example of a method of providing a torque to a walking-in-place exercise of a user by a wearable device according to an embodiment.

Referring to FIG. 27, in operation 2710, according to an embodiment, the wearable device 120 (e.g., the processor 310) may determine that the user 101 is performing a walking-in-place exercise. For example, the processor 310 may determine whether the user 101 is performing a walking-in-place exercise based on one or more of (i) the angle value at a cross timepoint at which both legs of the user 101 cross, (ii) the angle value at a contact timepoint at which at least a portion of a foot of the user 101 contacts the ground (or a take-off timepoint at which the foot of the user 101 is taken off from the ground), (iii) at least one of the maximum angle value or the minimum angle value of a joint (e.g., the first joint and/or the second joint) for a first period, (iv) the angle value of the joint (e.g., the first joint and/or the second joint) when the angular velocity value of the joint (e.g., the first joint and/or the second joint) is at maximum, or (v) a walking index value (e.g., a walking speed value and/or a stride value) of the user 101.

In the walking-in-place exercise, while one leg is performing a motion (e.g., a first motion and a second motion), the other leg may be in contact with the ground. In other words, in the walking-in-place exercise, while one leg is performing a flexion and an extension, the other leg may act as a supporting leg.

In operation 2720, the wearable device 120 (e.g., the processor 310) may provide, when a leg other than the supporting leg performs the first motion, an external force to the corresponding leg (e.g., the leg performing the first motion). Operation 2720 may include, for example, at least a portion of operations 2410 to 2430 of FIG. 24.

According to an embodiment, in operation 2720, the processor 310 may determine a first torque ratio value for the first motion (or the flexion). For example, the processor 310 may search for the first torque ratio value mapped to a level value of an exercise intensity of the user 101 in a table (e.g., Table 1 above) in which first torque ratio values and several level values of the exercise intensity are mapped. The processor 310 may determine a first adjusted torque value based on a first torque value (e.g., a torque value determined based on both hip joint angles, a gain value, and a delay value during the first motion) and the first torque ratio value. The processor 310 may control the driving module 30 (e.g., the first driving module 30a or the second driving module 30b) to provide an external force (or a torque) corresponding to the determined first adjusted torque value to the leg performing the first motion.

In operation 2740, the wearable device 120 (e.g., the processor 310) may not provide an external force (or a torque) to the supporting leg. While the leg other than the supporting leg performs the first motion, the wearable device 120 (e.g., the processor 310) may not provide an external force (or a torque) to the supporting leg. Embodiments are not limited thereto, and the wearable device 120 (e.g., the processor 310) may provide an external force of a small magnitude (e.g., an external force of a magnitude smaller than that of the external force provided in operation 2720 or an external force of a magnitude close to "0") to the supporting leg.

For example, when the leg other than the supporting leg performs the first motion, the processor 310 may determine the first torque value. When the torque value for one leg is, for example, *τ*(*t*), the torque value for the other leg may be, for example, -*τ*(*t*). Upon determining the first torque value for the leg performing the first motion, the processor 310 may apply a minus to the first torque value (or perform a multiplication operation to the first torque value and "-1", thereby determining the torque value for the supporting leg to be a - first torque value. The processor 310 may multiply the minus first torque value by a predetermined value such that an external force of a small magnitude may be provided to the supporting leg. The predetermined value may be a value that may make the torque of the wearable device 120 to a magnitude that the user 101 hardly feels (or a value that may make the magnitude of an external force (or a torque) to be provided to the user 101 close to "0"), as described above. The predetermined value may be, for example, a value close to "0" (e.g., "0.001", etc.). The processor 310 may control the driving module 30 (e.g., the first driving module 30a or the second driving module 30b) to provide an external force (or a torque) corresponding to a result of multiplying the minus first torque value and the predetermined value (e.g., the - first torque value × the predetermined value) to the supporting leg.

In operation 2730, the wearable device 120 (e.g., the processor 310) may not provide, when the leg other than the supporting leg performs the second motion, an external force (or a torque) to the corresponding leg (e.g., the leg performing the second motion). Embodiments are not limited thereto, and the wearable device 120 (e.g., the processor 310) may provide, when the leg other than the supporting leg performs the second motion, an external force of a small magnitude (e.g., an external force of a magnitude smaller than that of the external force provided in operation 2720 or an external force of a magnitude close to "0") to the corresponding leg (e.g., the leg performing the second motion). For example, the processor 310 may multiply a second torque value (e.g., a torque value determined based on both hip joint angles, a gain value, and a delay value during the second motion) by a predetermined value. The predetermined value may be, for example, a value that may make the torque of the wearable device 120 to a magnitude that the user 101 hardly feels. The predetermined value may be, for example, a value close to "0" (e.g., "0.001", etc.). The processor 310 may control the driving module 30 (e.g., the first driving module 30a or the second driving module 30b) to provide an external force (or a torque) corresponding to a result of multiplying the second torque value and the predetermined value (e.g., the second torque value × the predetermined value) to the leg performing the second motion.

In operation 2740, the wearable device 120 (e.g., the processor 310) may not provide, when the leg other than the supporting leg performs the second motion, an external force (or a torque) to the supporting leg. Embodiments are not limited thereto, and the wearable device 120 (e.g., the processor 310) may provide an external force of a small magnitude (e.g., an external force of a magnitude smaller than that of the external force provided in operation 2720) to the supporting leg.

For example, when the leg other than the supporting leg performs the second motion, the processor 310 may determine the second torque value. When the torque value for one leg is, for example, *τ*(*t*), the torque value for the other leg may be, for example, *-τ*(*t*)*.* Upon determining the second torque value for the leg performing the second motion, the processor 310 may apply a minus to the second torque value (or perform a multiplication operation to the second torque value and "-1", thereby determining the torque value for the supporting leg to be a - second torque value. The processor 310 may multiply the minus second torque value by a predetermined value such that an external force of a small magnitude may be provided to the supporting leg. The predetermined value may be, as described above, a value that may make the torque of the wearable device 120 to a magnitude that the user 101 hardly feels. The predetermined value may be, for example, a value close to "0" (e.g., "0.001", etc.). The processor 310 may control the driving module 30 (e.g., the first driving module 30a or the second driving module 30b) to provide an external force (or a torque) corresponding to a result of multiplying the minus second torque value and the predetermined value (e.g., the - second torque value × the predetermined value) to the supporting leg.

FIG. 28 shows an example of angle values of both hip joint angles of the user 101 performing a walking-in-place exercise. In the example shown in FIG. 28, the solid line may denote the angle values obtained by measuring the left hip joint angle through a first angle sensor, and the broken line may denote the angle values obtained by measuring the right hip joint angle through a second angle sensor.

In a time interval #1 2801 of FIG. 28, the absolute value of the hip joint angle of the left leg may increase to a timepoint t_{α}, which may indicate a first motion (or a flexion) of the left leg. From the timepoint t_{α} to the end of the time interval #1 2801, the absolute value of the hip joint angle of the left leg may decrease, which may indicate a second motion (or an extension) of the left leg. In the time interval #1 2801, the right leg may act as a supporting leg.

According to an embodiment, in the time interval #1 2801, the processor 310 may control the first driving module 30a to provide an external force (or a torque) corresponding to a first adjusted torque value to the left leg when the left leg performs the first motion (or the flexion). For example, the processor 310 may determine a first torque value based on the difference between the hip joint angles of both legs while the left leg is performing the first motion (or the flexion) in the time interval #1 2801. The processor 310 may determine the first adjusted torque value for the left leg based on the first torque value and a first torque ratio value. The processor 310 may control the first driving module 30a to provide an external force corresponding to the first adjusted torque value to the left leg.

According to an embodiment, when the left leg performs the first motion in the time interval #1 2801, the processor 310 may control the second driving module 30b to provide a torque of a small magnitude (e.g., a torque of a magnitude close to "0") to the right leg acting as a supporting leg. For example, the processor 310 may apply a minus to the first torque value in the time interval #1 2801, and multiply the minus first torque value by a predetermined value. The predetermined value may be, as described above, a value that may make the torque of the wearable device 120 to a magnitude that the user 101 hardly feels (e.g., "0.001", etc.). The processor 310 may control the second driving module 30b to provide an external force (or a torque) corresponding to a result of multiplying the minus first torque value and the predetermined value (e.g., the - first torque value × the predetermined value) to the right leg.

According to an embodiment, when the left leg performs the first motion in the time interval #1 2801, the processor 310 may cause not to provide an external force to the right leg in the time interval #1 2801. For example, the processor 310 may apply a minus to the first torque value in the time interval #1 2801, and multiply the minus first torque value by "0". The processor 310 may multiply the minus first torque value by "0", thereby controlling the wearable device 120 not to provide an external force to the right leg when the left leg performs the first motion in the time interval #1 2801. Upon detecting that the left leg performs the first motion in the time interval #1 2801, the processor 310 may temporarily stop supplying power to the second driving module 30b not to provide an external force to the right leg.

According to an embodiment, in the time interval #1 2801, the processor 310 may control the first driving module 30a to provide an external force of a small magnitude (e.g., a magnitude close to "0") to the left leg when the left leg performs the second motion (or the extension). For example, the processor 310 may determine a second torque value based on the difference between the hip joint angles of both legs when the left leg performs the second motion (or the extension) in the time interval #1 2801. The processor 310 may multiply the second torque value by a predetermined value (e.g., "0.001", etc.) and control the first driving module 30a to provide an external force (or a torque) corresponding to a result of multiplying the second torque value and the predetermined value to the left leg.

According to an embodiment, in the time interval #1 2801, the processor 310 may cause not to provide an external force to the left leg when the left leg performs the second motion (or the extension). For example, the processor 310 may determine the second torque value based on the difference between the hip joint angles of both legs when the left leg performs the second motion (or the extension) in the time interval #1 2801, and multiply the second torque value by "0". The processor 310 may multiply the second torque value by "0", thereby controlling wearable device 120 not to provide an external force to the left leg when the left leg performs the second motion in the time interval #1 2801. Upon detecting that the left leg performs the second motion in the time interval #1 2801, the processor 310 may temporarily stop supplying power to the first driving module 30a not to provide an external force to the left leg.

According to an embodiment, when the left leg performs the second motion in the time interval #1 2801, the processor 310 may control the second driving module 30b to provide a torque of a small magnitude (e.g., a torque of a magnitude close to "0") to the right leg acting as a supporting leg. For example, the processor 310 may apply a minus to the second torque value in the time interval #1 2801, and multiply the minus second torque value by a predetermined value (e.g., "0.001", etc.). The processor 310 may control the second driving module 30b to provide an external force (or a torque) corresponding to a result of multiplying the minus second torque value and the predetermined value to the right leg.

According to an embodiment, when the left leg performs the second motion in the time interval #1 2801, the processor 310 may cause not to provide an external force to the right leg in the time interval #1 2801. For example, the processor 310 may apply a minus to the second torque value in the time interval #1 2801, and multiply the minus second torque value by "0". The processor 310 may multiply the minus second torque value by "0", thereby controlling the wearable device 120 not to provide an external force to the right leg when the left leg performs the second motion in the time interval #1 2801. Upon detecting that the left leg performs the second motion in the time interval #1 2801, the processor 310 may temporarily stop supplying power to the second driving module 30b not to provide an external force to the right leg.

In a time interval #2 2802 of FIG. 28, the absolute value of the hip joint angle of the right leg may increase to a timepoint t_{β}, which may indicate a first motion (or a flexion) of the right leg. From the timepoint t_{β} to the end of the time interval #2 2802, the absolute value of the hip joint angle of the right leg may decrease, which may indicate a second motion (or an extension) of the right leg. In the time interval #2 2802, the left leg may act as a supporting leg.

According to an embodiment, similar to the operation of providing an external force to the left leg performing the first motion in the time interval #1 2801, the processor 310 may control the second driving module 30b to provide an external force to the right leg performing the first motion in the time interval #2 2802. The processor 310 may control the first driving module 30a to provide an external force of a small magnitude (e.g., a magnitude close to "0") to the left leg acting as a supporting leg or not to provide an external force to the left leg when the right leg performs the first motion in the time interval #2 2802.

According to an embodiment, similar to the operation for the left leg performing the second motion in the time interval #1 2801, the processor 310 may control the second driving module 30b to provide an external force of a small magnitude to the right leg performing the second motion in the time interval #2 2802 or not to provide an external force to the right leg. The processor 310 may control the first driving module 30a to provide an external force of a small magnitude (e.g., a magnitude close to "0") to the left leg acting as a supporting leg or not to provide an external force to the left leg when the right leg performs the second motion in the time interval #2 2802.

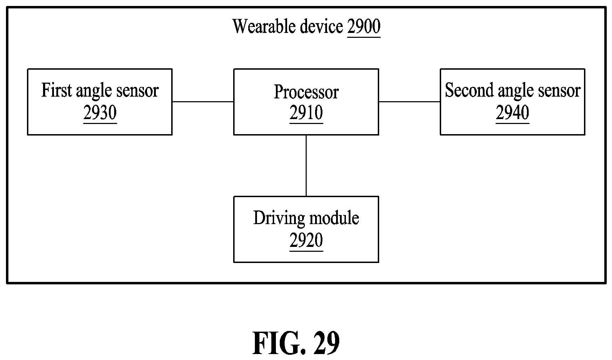

FIG. 29 is a block diagram illustrating an example of a configuration of a wearable device according to an embodiment.

Referring to FIG. 29, according to an embodiment, a wearable device 2900 may include a processor 2910 (e.g., the processor 310), a driving module 2920 comprising circuitry and/or a motor, a first angle sensor 2930 (e.g., the angle sensor 320), and a second angle sensor 2940 (e.g., the angle sensor 320-1). The wearable device 2900 of FIG. 29 may include the components (e.g., at least one or all of the battery 330, the PMIC 340, the memory 350, the IMU 360, or the communication module 390) of the wearable devices 300 and 300-1 of FIGS. 3A and 3B. The angle sensor(s) may or may not be part of the driving module 2920.

The wearable device 2900 of FIG. 29 may be an example of the wearable device 120.

The wearable device 2900 of FIG. 29 may provide external forces (or torques) respectively to both legs of the user 101 using the single driving module 2920. The driving module 2920 may include, for example, a motor (e.g., the motor 380 of FIG. 3B) and a motor driver circuit (e.g., the motor driver circuit 370 of FIG. 3B).

According to an embodiment, the first leg driving frame 70a and the second leg driving frame 70b may each be connected to the driving module 2920. The first leg driving frame 70a and the second leg driving frame 70b may each rotate according to an external force (or a torque) generated by the driving module 2920. At this time, the direction of rotation of the first leg driving frame 70a and the rotation direction of the second leg driving frame 70b may be opposite. External forces generated by the driving module 2920 in response to the respective rotations of the first leg driving frame 70a and the second leg driving frame 70b may be provided to the user 101.

According to an embodiment, the first angle sensor 2930 may measure or sense at least one of the angle, angular velocity, or angular acceleration of a first joint (e.g., the left hip joint, etc.) of the user 101. The first angle sensor 2930 may transmit the measurement result (e.g., at least one of the angle value, angular velocity value, or angular acceleration value of the first joint) to the processor 2910.

According to an embodiment, the second angle sensor 2940 may measure or sense at least one of the angle, angular velocity, or angular acceleration of a second joint (e.g., the right hip joint) of the user 101. The second angle sensor 2940 may transmit the measurement result (e.g., at least one of the angle value, angular velocity value, or angular acceleration value of the second joint) to the processor 2910.

According to an embodiment, the processor 2910 may receive one or more angle values of the first joint from the first angle sensor 2930 and receive one or more angle values of the second joint from the second angle sensor 2940.

According to an embodiment, the processor 2910 may determine whether the user 101 is performing an exercise. The user 101 may perform a target exercise (e.g., a forward-walking exercise, an exercise according to an exercise program, etc.) while wearing the wearable device 2900. The processor 2910 may determine whether the user 101 is performing an exercise (e.g., the target exercise) through at least one or all of changes in the angle values of the first joint, changes in the angle values of the second joint, or the acceleration information of the user 101.

According to an embodiment, in response to the determination that the user 101 is performing an exercise (e.g., the target exercise), the processor 2910 may control the driving module 2920 to provide the user 101 with an external force (or a torque) (e.g., an assistance force or a resistance force). For example, when the user 101 is performing a forward-walking exercise, the processor 2910 may determine a torque value (e.g., a torque value *τ*(*t*)) based on the difference value between the angle value of the first joint and the angle value of the second joint, and the value of at least one parameter (e.g., a gain and/or a delay, etc.). The processor 2910 may control the driving module 2920 to provide the user 101 with an external force (or a torque) suitable for the forward-walking exercise based on the determined torque value. An external force (or a torque) corresponding to the torque value (e.g., the torque value *τ*(*t*)) may be generated by the driving module 2920. The first leg driving frame 70a and the second leg driving frame 70b may each rotate in different directions due to the external forces generated by the driving module 2920. External forces generated by the driving module 2920 in response to the respective rotations of the first leg driving frame 70a and the second leg driving frame 70b may be provided to the user 101.

According to an embodiment, the processor 2910 may determine whether the user 101 is performing a walking-in-place exercise. The processor 2910 may perform operation 530 of FIG. 5 (e.g., operations 610 to 640 of FIG. 6, operations 910 to 940 of FIG. 9, operations 1210 to 1240 of FIG. 12, operations 1410 to 1440 of FIG. 14, operations 1710 to 1740 of FIG. 17, operations 2010 to 2040 of FIG. 20, or operations 2310 to 2350 of FIG. 23).

For example, the processor 2910 may determine whether the user 101 is performing a walking-in-place exercise based on one or more of (i) the angle value at a cross timepoint at which both legs of the user 101 cross, (ii) the angle value at a contact timepoint at which at least a portion of a foot of the user 101 contacts the ground (or a take-off timepoint at which the foot of the user 101 is taken off from the ground), (iii) at least one of the maximum angle value or the minimum angle value of a joint (e.g., the first joint and/or the second joint) for a first period, (iv) the angle value of the joint (e.g., the first joint and/or the second joint) when the angular velocity value of the joint (e.g., the first joint and/or the second j oint) is at maximum, or (v) a walking index value (e.g., a walking speed value and/or a stride value) of the user 101.

According to an embodiment, in response to the determination that the user 101 is performing a walking-in-place exercise, the processor 2910 may control the driving module 2920 to provide the user 101 with an external force suitable for a walking-in-place exercise. For example, the processor 2910 may determine the torque value (e.g., the torque value *τ*(*t*)) based on the difference value between the angle value of the first joint and the angle value of the second joint, and the value of at least one parameter (e.g., a gain and/or a delay, etc.). The processor 2910 may control the driving module 2920 to provide the user 101 with an external force (or a torque) suitable for a walking-in-place exercise based on the determined torque value. The first leg driving frame 70a and the second leg driving frame 70b may each rotate in different directions due to the external forces generated by the driving module 2920. External forces generated by the driving module 2920 according to the respective rotations of the first leg driving frame 70a and the second leg driving frame 70b may be provided to the user 101.

According to an embodiment, the processor 2910 may determine a torque value (hereinafter, referred to as the torque value "a") based on the difference value between the angle value of the first joint and the angle value of the second joint when the user 101 performs a first motion (or a flexion) in a walking-in-place exercise and the value of at least one parameter, and control the driving module 2920 to provide the user 101 with an external force corresponding to the determined torque value (e.g., the torque value "a").

According to an embodiment, the processor 2910 may control the wearable device 2900 not to provide the user 101 with an external force (or to provide the user 101 with an external force of a small magnitude) when the user 101 performs a second motion (or an extension) in a walking-in-place exercise. For example, the processor 2910 may determine a torque value (hereinafter, referred to as the torque value "b") based on the difference value between the angle value of the first joint and the angle value of the second joint when the user 101 performs the second motion (or the extension) in a walking-in-place exercise and the value of at least one parameter. The processor 2910 may multiply the determined torque value (e.g., the torque value "b") by "0" (or a predetermined value). The predetermined value may be, for example, a value that may make the torque of the wearable device 2900 to a magnitude that the user 101 hardly feels (or a value that may make the magnitude of an external force (or a torque) to be provided to the user 101 close to "0"), as described above. The processor 2910 may multiply the determined torque value (e.g., the torque value "b") by "0" (or the predetermined value), thereby controlling the wearable device 2900 not to provide the user 101 with an external force or to provide the user 101 with an external force of a small magnitude when the user 101 performs the second motion.

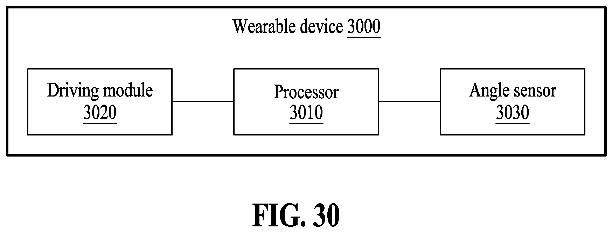

FIG. 30 is a block diagram illustrating an example of a configuration of a wearable device according to an embodiment.

Referring to FIG. 30, according to an embodiment, a wearable device 3000 may include a at least one processor 3010 (e.g., the processor 310), a driving module 3020, and an angle sensor 3030. The wearable device 3000 of FIG. 30 may include the components (e.g., at least one or all of the battery 330, the PMIC 340, the memory 350, the IMU 360, or the communication module 390) of the wearable devices 300 and 300-1 of FIGS. 3A and 3B.

The wearable device 3000 of FIG. 30 may be an example of the wearable device 120.

The wearable device 3000 of FIG. 30 may provide external forces (or torques) (e.g., resistance forces or assistance forces) respectively to both legs of the user 101 using the single driving module 3020. The driving module 3020 may include, for example, a motor (e.g., the motor 380 of FIG. 3B) and a motor driver circuit (e.g., the motor driver circuit 370 of FIG. 3B).

According to an embodiment, the first leg driving frame 70a and the second leg driving frame 70b may each be connected, directly or indirectly, to the driving module 3020. The first leg driving frame 70a and the second leg driving frame 70b may each rotate according to an external force (or a torque) generated by the driving module 3020. At this time, the direction of rotation of the first leg driving frame 70a and the rotation direction of the second leg driving frame 70b may be opposite. External forces generated by the driving module 3020 in response to the respective rotations of the first leg driving frame 70a and the second leg driving frame 70b may be provided to the user 101.

According to an embodiment, the angle sensor 3030 may obtain (or measure) the difference value between the angle of a first joint and the angle of a second joint. The angle sensor 3030 may sense a motion of the second joint with respect to the first joint (or the angle value of the second joint with respect to the first j oint). The angle sensor 3030 may transmit the difference value between the angle of the first joint and the angle of the second joint (or a result of sensing the motion of the second joint with respect to the first joint) to the processor 3010.

According to an embodiment, the processor 3010 may receive one or more difference values between the angle of the first joint and the angle of the second joint from the angle sensor 3030.

According to an embodiment, the processor 3010 may determine whether the user 101 is performing an exercise. The user 101 may perform a target exercise (e.g., a forward-walking exercise, an exercise according to an exercise program, etc.) while wearing the wearable device 3000. The processor 3010 may determine whether the user 101 is performing an exercise (e.g., the target exercise) through at least one or all of changes in the difference values between the angle of the first joint and the angle of the second j oint, or the acceleration information of the user 101.

According to an embodiment, in response to the determination that the user 101 is performing an exercise (e.g., the target exercise), the processor 3010 may control the driving module 3020 to provide the user 101 with an external force (or a torque) (e.g., an assistance force or a resistance force). For example, when the user 101 is performing a forward-walking exercise, the processor 3010 may determine a torque value (e.g., a torque value *τ*(*t*)) based on the difference value between the angle of the first joint and the angle of the second joint, and the value of at least one parameter (e.g., a gain and/or a delay, etc.). The processor 3010 may control the driving module 3020 to provide the user 101 with an external force (or a torque) suitable for the forward-walking exercise based on the determined torque value. An external force (or a torque) corresponding to the torque value (e.g., the torque value *τ*(*t*)) may be generated by the driving module 3020. The first leg driving frame 70a and the second leg driving frame 70b may each rotate in different directions due to the external forces generated by the driving module 3020. External forces generated by the driving module 3020 in response to the respective rotations of the first leg driving frame 70a and the second leg driving frame 70b may be provided to the user 101.

According to an embodiment, the processor 3010 may determine whether the user 101 is performing a walking-in-place exercise. The processor 3010 may perform operation 530 of FIG. 5 (e.g., operations 910 to 940 of FIG. 9, operations 1210 to 1240 of FIG. 12, operations 1410 to 1440 of FIG. 14, operations 1710 to 1740 of FIG. 17, operations 2010 to 2040 of FIG. 20, or operations 2310 to 2350 of FIG. 23).

For example, the processor 3010 may determine whether the user 101 is performing a walking-in-place exercise based on one or more of (i) the angle value at a contact timepoint at which at least a portion of a foot of the user 101 contacts the ground (or a take-off timepoint at which the foot of the user 101 is taken off from the ground), (ii) at least one of the maximum angle value or the minimum angle value of a joint (e.g., the first joint and/or the second joint) for a first period, (iii) the angle value of the joint (e.g., the first joint and/or the second joint) when the angular velocity value of the joint (e.g., the first joint and/or the second joint) is at maximum, or (iv) a walking index value (e.g., a walking speed value and/or a stride value) of the user 101.

According to an embodiment, in response to the determination that the user 101 is performing a walking-in-place exercise, the processor 3010 may control the driving module 3020 to provide the user 101 with an external force suitable for a walking-in-place exercise. For example, the processor 3010 may determine the torque value (e.g., the torque value *τ*(*t*)) based on the difference value between the angle of the first joint and the angle of the second joint, and the value of at least one parameter (e.g., a gain and/or a delay, etc.). The processor 3010 may control the driving module 3020 to provide the user 101 with an external force (or a torque) suitable for a walking-in-place exercise based on the determined torque value.

According to an embodiment, the processor 3010 may determine a torque value (hereinafter, referred to as the torque value "a") based on the difference value between the angle of the first joint and the angle of the second joint when the user 101 performs a first motion (or a flexion) in a walking-in-place exercise and the value of at least one parameter, and control the driving module 3020 to provide the user 101 with an external force corresponding to the determined torque value (e.g., the torque value "a").

According to an embodiment, the processor 3010 may control the wearable device 3000 not to provide the user 101 with an external force (or to provide the user 101 with an external force of a small magnitude) when the user 101 performs a second motion (or an extension) in a walking-in-place exercise. For example, the processor 3010 may determine a torque value (hereinafter, referred to as the torque value "b") based on the difference value between the angle of the first joint and the angle of the second joint when the user 101 performs the second motion (or the extension) in a walking-in-place exercise and the value of at least one parameter. The processor 3010 may multiply the determined torque value (e.g., the torque value "b") by "0" (or a predetermined value). The predetermined value may be, for example, a value that may make the torque of the wearable device 3000 to a magnitude that the user 101 hardly feels (or a value that may make the magnitude of an external force (or a torque) to be provided to the user 101 close to "0"), as described above. The processor 3010 may multiply the determined torque value (e.g., the torque value "b") by "0" (or the predetermined value), thereby controlling the wearable device 3000 not to provide the user 101 with an external force or to provide the user 101 with an external force of a small magnitude when the user 101 performs the second motion.

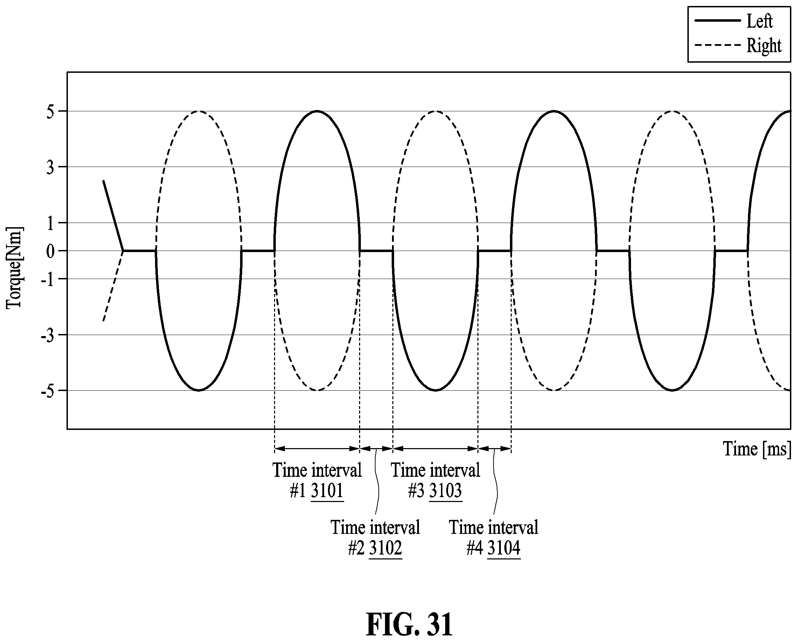

FIG. 31 is a diagram illustrating another example of a method of providing a torque to a walking-in-place exercise of a user by a wearable device according to an embodiment.

Referring to FIG. 31, an example of the waveforms of torques provided by the wearable device 2900 or 3000 respectively to both legs of the user 101 performing a walking-in-place exercise is shown. In the example shown in FIG. 31, the solid line may denote the waveform of the torque provided to the left leg of the user 101, and the broken line may denote the waveform of the torque provided to the right leg of the user 101.

In a time interval #1 3 101 of FIG. 31, the right leg of the user 101 may perform a first motion (or a flexion), and the left leg of the user 101 may correspond to a supporting leg.

According to an embodiment, in the time interval #1 3101, the wearable device 2900 or 3000 may provide an external force to the right leg performing the first motion and provide an external force to the left leg. For example, in the time interval #1 3101, the wearable device 2900 or 3000 may provide an external force corresponding to a negative torque value (e.g., the torque value "a" described with reference to FIGS. 29 and 30) to the right leg, and provide an external force corresponding to a positive torque value (e.g., -1 ×torque value "a") to the left leg.

In a time interval #2 3102 of FIG. 31, the right leg of the user 101 may perform a second motion (or an extension), and the left leg of the user 101 may correspond to a supporting leg.

According to an embodiment, in the time interval #2 3102, the wearable device 2900 or 3000 may not provide external forces to the right leg performing the second motion and the left leg corresponding to the supporting leg. For example, the wearable device 2900 or 3000 may not provide external forces respectively to both legs by multiplying a torque value (e.g., the torque value "b" described with reference to FIGS. 29 and 30) by "0" in the time interval #2 3102. As another example, upon detecting that the right leg performs the second motion in the time interval #2 3102, the wearable device 2900 or 3000 may temporarily stop supplying power to the driving module 2920 or 3020. Depending on the implementation, in the time interval #2 3102, the wearable device 2900 or 3000 may provide an external force of a small magnitude (e.g., a magnitude close to "0") to the right leg performing the second motion, and provide an external force of a small magnitude (e.g., a magnitude close to "0") to the left leg corresponding to the supporting leg.

In a time interval #3 3103 of FIG. 31, the left leg of the user 101 may perform a first motion (or a flexion), and the right leg of the user 101 may correspond to a supporting leg.

According to an embodiment, in the time interval #3 3103, the wearable device 2900 or 3000 may provide an external force to the left leg performing the first motion and provide an external force to the right leg corresponding to the supporting leg. For example, in the time interval #3 3103, the wearable device 2900 or 3000 may provide an external force corresponding to a negative torque value (e.g., the torque value "a" described with reference to FIGS. 29 and 30) to the left leg, and provide an external force corresponding to a positive torque value (e.g., -1×torque value "a") to the right leg.

In a time interval #4 3104 of FIG. 31, the left leg of the user 101 may perform a second motion (or an extension), and the right leg of the user 101 may correspond to a supporting leg.

According to an embodiment, in the time interval #4 3104, the wearable device 2900 or 3000 may not provide an external force to the left leg performing the second motion and may not provide an external force to the right leg corresponding to the supporting leg. For example, the wearable device 2900 or 3000 may not provide external forces respectively to both legs by multiplying a torque value (e.g., the torque value "b" described with reference to FIGS. 29 and 30) by "0" in the time interval #4 3104. As another example, upon detecting that the left leg performs the second motion in the time interval #4 3104, the wearable device 2900 or 3000 may temporarily stop supplying power to the driving module 2920 or 3020. Depending on the implementation, in the time interval #4 3104, the wearable device 2900 or 3000 may provide an external force of a small magnitude (e.g., a magnitude close to "0") to the left leg performing the second motion, and provide an external force of a small magnitude (e.g., a magnitude close to "0") to the right leg corresponding to the supporting leg.

The embodiments described with reference to FIGS. 1 to 30 may apply to the wearable device 2900 or 3000 of FIG. 31.

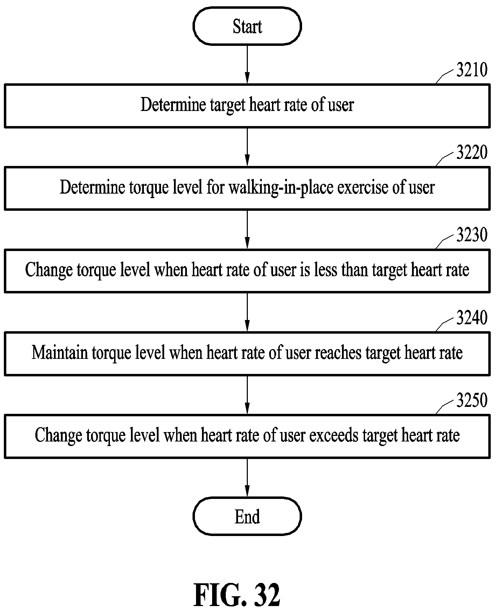

FIG. 32 is a flowchart illustrating another example of a method of providing a torque to a walking-in-place exercise of a user by a wearable device according to an embodiment.

Referring to FIG. 32, in operation 3210, according to an embodiment, a wearable device (e.g., the wearable device 120, the wearable device 2900, or the wearable device 3000) (hereafter, expressed as the wearable device 120) may determine a target heart rate of the user 101.

According to an embodiment, in operation 3210, a processor (e.g., the processor 310, the processor 2910, or the processor 3010) (hereinafter, expressed as the processor 310) may determine the target heart rate of the user 101 based on user information (e.g., the age or health condition information of the user 101, etc.). The health condition information may include, for example, information on whether the user 101 has a disease (e.g., hypertension, etc.), the maximum heart rate of the user 101, the resting heart rate of the user 101, and the like.

For example, the processor 310 may determine the target heart rate according to a mathematical expression "[the maximum heart rate of the user 101 - the resting heart rate of the user 101] × exercise intensity factor (%) + the resting heart rate of the user 101". The exercise intensity factor may be determined, for example, based on a level value of the exercise intensity of a walking-in-place exercise. As an example, the processor 310 may determine the exercise intensity factor to be a value between "0.5" and "0.6" if the level value of the exercise intensity of the walking-in-place exercise is "1", determine the exercise intensity factor to be a value between "0.6" and "0.7" if the level value of the exercise intensity is "2", and determine the exercise intensity factor to be a value between "0.7" and "0.8" if the level value of the exercise intensity is "3". The processor 310 may determine the exercise intensity factor to be a value between "0.8" and "0.9" if the level value of the exercise intensity is "4", and determine the exercise intensity factor to be a value between "0.9" and "1" if the level value of the exercise intensity is "5". Embodiments of determining the target heart rate are not limited to the embodiment of determining according to the mathematical expression described above.

According to an embodiment, in operation 3210, the processor 310 may determine the target heart rate of the user 101 based on a physical fitness assessment result of the user 101. For example, the processor 310 may control the wearable device 120 to operate in a physical ability measurement mode to measure the physical fitness (or the physical ability) (e.g., the walking ability, muscle strength, balance, possibility of falls, etc.) of the user 101. The processor 310 may obtain sensor data (e.g., the angle values obtained by the angle sensors 320 and 320-1 and/or the motion information obtained by the IMU 360) according to a motion of the user 101. The processor 310 may measure or estimate the physical fitness (or the physical ability) of the user 101 by analyzing the sensor data. As another example, the processor 310 may cause the user 101 to get a Timed Up and Go (TUG) test. In the TUG test, the time that the user 101 sitting on a chair wearing the wearable device 120 takes to rise from the chair, walk a predetermined distance (e.g., "3" meters), walk back to the chair, and sit down on the chair may be measured. The processor 310 may measure or estimate the physical ability (e.g., the mobility, walking ability, fall risk, etc.) of the user 101 based on the measured time. As another example, the processor 310 may cause the user 101 to get a 5 Times Sit to Stand (5xSTS) test. In the 5xSTS test, the time that the user 101 sitting on a chair wearing the wearable device 120 takes to perform a motion of standing and sitting a predetermined number of times (e.g., "5" times) may be measured. The processor 310 may measure or estimate the physical ability (e.g., the leg strength) of the user 101 based on the measured time. Examples of determining the physical fitness of the user 101 are not limited to the examples described above. The processor 310 may determine the target heart rate of the user 101 through the physical fitness assessment result of the user 101.

In operation 3220, the wearable device 120 (e.g., the processor 310) may determine a torque level (e.g., a starting torque level) for a walking-in-place exercise of the user 101. The torque level may indicate, for example, a torque magnitude and a torque type (e.g., a resistance torque or an assistance torque) to be provided to a user when the user performs a walking-in-place exercise.

According to an embodiment, in operation 3220, the processor 310 may determine the torque level (e.g., the starting torque level) through the physical fitness assessment result of the user 101. The starting torque level may be, for example, the torque level when a user starts a walking-in-place exercise. Table 2 below shows examples of torque levels.

**[Table 2]**

| Torque level | Indication | Parameter value (e.g., gain value) |
|---|---|---|
| First torque level | Assistance torque (or assistance force) of great magnitude | Positive first gain value |
| Second torque level | Assistance torque (or assistance force) of moderate magnitude | Positive second gain value (here, the second gain value is less than the first gain value) |
| Third torque level | Assistance torque (or assistance force) of small magnitude | Positive third gain value (here, the third gain value is less than the second gain value) |
| Fourth torque level | No torque | Fourth gain value (e.g., "0") |
| Fifth torque level | Resistance torque (or resistance force) of small magnitude | Negative fifth gain value (here, the magnitude of the negative fifth gain value is smaller than the magnitude of the negative sixth gain value) |
| Sixth torque level | Resistance torque (or resistance force) of moderate magnitude | Negative sixth gain value (here, the magnitude of the negative sixth gain value is smaller than the magnitude of the negative seventh gain value) |
| Seventh torque level | Resistance torque (or resistance force) of great magnitude | Negative seventh gain value |

Although Table 2 above describes examples of seven torque levels, which are merely examples, the torque levels may be divided more or fewer than in Table 2 above.

The processor 310 may determine one of a plurality of torque levels (e.g., the seven torque levels in Table 2 above) to be the torque level (e.g., the starting torque level) for a walking-in-place exercise through the physical fitness assessment result of the user 101. The processor 310 may provide the physical fitness assessment result of the user 101 as a score. When the highest score is, for example, "100" points, the lower the score of the physical fitness assessment result of the user 101, the lower the physical fitness of the user 101 may be measured (or evaluated).

For example, the processor 310 may determine the first torque level to be the starting torque level for a walking-in-place exercise when the score of the physical fitness assessment result of the user 101 falls within a first range (e.g., "30" points to "40" points). The processor 310 may determine the second torque level to be the starting torque level for a walking-in-place exercise when the score of the physical fitness assessment result of the user 101 falls within a second range (e.g., "40" points to "50" points). The processor 310 may determine the third torque level to be the starting torque level for a walking-in-place exercise when the score of the physical fitness assessment result of the user 101 falls within a third range (e.g., "50" points to "60" points). The processor 310 may determine the fourth torque level to be the starting torque level for a walking-in-place exercise when the score of the physical fitness assessment result of the user 101 falls within a fourth range (e.g., "60" points to "70" points). The processor 310 may determine the fifth torque level to be the starting torque level for a walking-in-place exercise when the score of the physical fitness assessment result of the user 101 falls within a fifth range (e.g., "70" points to "80" points). The processor 310 may determine the sixth torque level to be the starting torque level for a walking-in-place exercise when the score of the physical fitness assessment result of the user 101 falls within a sixth range (e.g., "80" points to "90" points). The processor 310 may determine the seventh torque level to be the starting torque level for a walking-in-place exercise when the score of the physical fitness assessment result of the user 101 falls within a seventh range (e.g., "90" points to "100" points).

According to an embodiment, the processor 310 may determine the starting torque level for a walking-in-place exercise using the level value of the exercise intensity of the walking-in-place exercise input from the user 101 and an operation mode (e.g., an assistance mode or a resistance mode) of the wearable device 120 input from the user 101.

For example, when the assistance mode and the level value "5" (or "4") are input by the user 101, the processor 310 may determine the first torque level to be the starting torque level for a walking-in-place exercise. When the assistance mode and the level value "3" (or "2") are input by the user 101, the processor 310 may determine the second torque level to be the starting torque level for a walking-in-place exercise. When the assistance mode and the level value "1" are input by the user 101, the processor 310 may determine the third torque level to be the starting torque level for a walking-in-place exercise. The processor 310 may receive a no-torque operation mode from the user 101. When the no-torque operation mode is input by the user 101, the processor 310 may determine the fourth torque level to be the starting torque level for a walking-in-place exercise. When the resistance mode and the level value "1" are input by the user 101, the processor 310 may determine the fifth torque level to be the starting torque level for a walking-in-place exercise. When the resistance mode and the level value "3" (or "2") are input by the user 101, the processor 310 may determine the sixth torque level to be the starting torque level for a walking-in-place exercise. When the resistance mode and the level value "5" (or "4") are input by the user 101, the processor 310 may determine the seventh torque level to be the starting torque level for a walking-in-place exercise.

According to an embodiment, the processor 310 may receive one of the plurality of torque levels from the user 101, and determine the input torque level to be the starting torque level for a walking-in-place exercise. For example, the user 101 may input one of the plurality of torque levels into at least one of the smart watch 132 or the electronic device 110. The processor 310 may receive the torque level input by the user 101 from at least one of the smart watch 132 or the electronic device 110. The processor 310 may determine the received torque level (e.g., the torque level input by the user 101) to be the starting torque level for a walking-in-place exercise.

In operation 3230, the wearable device 120 (e.g., the processor 310) may change (or increase) the torque level when the heart rate of the user 101 is less than the target heart rate (or a target heart rate range). The target heart rate range may, for example, the target heart rate × "0.9" to the target heart rate × "1.1", but is not limited thereto.

According to an embodiment, in operation 3230, the processor 310 may control a driving module (e.g., the driving module 30, the driving module 2920, or the driving module 3020) to provide the user 101 with an external force (or a torque) according to the determined torque level (e.g., the determined starting torque level) when the user 101 starts performing a walking-in-place exercise.

For example, the processor 310 may determine the first torque level to be the starting torque level. The processor 310 may determine a torque value based on a gain value (e.g., a positive first gain value), a delay value, and a difference value between both hip joint angles corresponding to the first torque level when the user 101 performs a walking-in-place exercise. At the first torque level, the processor 310 may control the driving module (e.g., the driving module 30, the driving module 2920, or the driving module 3020) to provide the user 101 with an external force (e.g., an assistance force) corresponding to the determined torque value.

For example, the processor 310 may determine the second torque level to be the starting torque level. The processor 310 may determine a torque value based on a gain value (e.g., a positive second gain value), a delay value, and a difference value between both hip joint angles corresponding to the second torque level when the user 101 performs a walking-in-place exercise. At the second torque level, the processor 310 may control the driving module (e.g., the driving module 30, the driving module 2920, or the driving module 3020) to provide the user 101 with an external force (e.g., an assistance force) corresponding to the determined torque value.

For example, the processor 310 may determine the third torque level to be the starting torque level. The processor 310 may determine a torque value based on a gain value (e.g., a positive third gain value), a delay value, and a difference value between both hip joint angles corresponding to the third torque level when the user 101 performs a walking-in-place exercise. At the third torque level, the processor 310 may control the driving module (e.g., the driving module 30, the driving module 2920, or the driving module 3020) to provide the user 101 with an external force (e.g., an assistance force) corresponding to the determined torque value.

For example, the processor 310 may determine the fourth torque level to be the starting torque level. Since the fourth gain value corresponding to the fourth torque level may be "0", the processor 310 may control not to provide the user 101 with a torque when the user 101 performs a walking-in-place exercise.

For example, the processor 310 may determine the fifth torque level to be the starting torque level. The processor 310 may determine a torque value based on a gain value (e.g., a negative fifth gain value), a delay value, and a difference value between both hip joint angles corresponding to the fifth torque level when the user 101 performs a walking-in-place exercise. At the fifth torque level, the processor 310 may control the driving module (e.g., the driving module 30, the driving module 2920, or the driving module 3020) to provide the user 101 with an external force (e.g., a resistance force) corresponding to the determined torque value.

For example, the processor 310 may determine the sixth torque level to be the starting torque level. The processor 310 may determine a torque value based on a gain value (e.g., a negative sixth gain value), a delay value, and a difference value between both hip joint angles corresponding to the sixth torque level when the user 101 performs a walking-in-place exercise. At the sixth torque level, the processor 310 may control the driving module (e.g., the driving module 30, the driving module 2920, or the driving module 3020) to provide the user 101 with an external force (e.g., a resistance force) corresponding to the determined torque value.

For example, the processor 310 may determine the seventh torque level to be the starting torque level. The processor 310 may determine a torque value based on a gain value (e.g., a negative seventh gain value), a delay value, and a difference value between both hip joint angles corresponding to the seventh torque level when the user 101 performs a walking-in-place exercise. At the seventh torque level, the processor 310 may control the driving module (e.g., the driving module 30, the driving module 2920, or the driving module 3020) to provide the user 101 with an external force (e.g., a resistance force) corresponding to the determined torque value.

According to an embodiment, the processor 310 may receive the heart rate of the user 101 performing a walking-in-place exercise from at least one of the smart watch 132 or the electronic device 110. The processor 310 may increase the torque level when the received heart rate is less than the target heart rate (or the target heart rate range). For example, if the heart rate of the user 101 does not reach the target heart rate (or the target heart rate range) within a determined time at the starting torque level (e.g., the second torque level) (or if the heart rate of the user 101 is less than the target heart rate for a determined time), the processor 310 may increase (or change) the torque level from the starting torque level (e.g., the second torque level) to the third torque level. The processor 310 may control the driving module 30 to provide the user 101 with an external force (or a torque) according to the third torque level. If the heart rate of the user 101 does not reach the target heart rate within a determined time at the third torque level, the processor 310 may increase (or change) the torque level for a walking-in-place exercise from the third torque level to the fourth torque level. The processor 310 may repeatedly increase (or change) the torque level until the heart rate of the user 101 reaches the target heart rate (or the target heart rate range).

According to an embodiment, the processor 310 may increase the torque level sequentially (or by one level) until the heart rate of the user 101 reaches the target heart rate (or the target heart rate range). Embodiments are not limited thereto, and the processor 310 may increase the torque level by more than two levels so that the heart rate of the user 101 may reach the target heart rate (or the target heart rate range) more quickly. For example, when the torque level for a walking-in-place exercise is the first torque level, the processor 310 may increase the torque level for a walking-in-place exercise from the first torque level to the third torque level (or the fourth torque level, the fifth torque level, the sixth torque level, or the seventh torque level).

According to an embodiment, the processor 310 may determine whether the heart rate of the user 101 is difficult to reach the target heart rate (or the target heart rate range) even if the torque level is increased while the heart rate of the user 101 is less than the target heart rate (or the target heart rate range). The processor 310 may determine whether it is difficult to cause the heart rate of the user 101 to reach the target heart rate (or the target heart rate range) simply by increasing the torque level. In response to the determination that the heart rate of the user 101 is difficult to reach the target heart rate (or the target heart rate range), the processor 310 may control the wearable device 120 to provide the user 101 with a guide (e.g., an audio guide, etc.) indicating the exercise speed of the walking-in-place exercise needs to be increased.

For example, when the heart rate of the user 101 changes little (or when the increment of the heart rate is less than a predetermined level) even if the torque level is increased, the processor 310 may determine that the heart rate of the user 101 is difficult to reach the target heart rate (or the target heart rate range) simply by increasing the torque level. The processor 310 may determine that the heart rate of the user 101 is difficult to reach the target heart rate (or the target heart rate range) simply by increasing the torque level if the heart rate of the user 101 does not reach the target heart rate (or the target heart rate range) even at the last torque level (e.g., the seventh torque level). In response to the determination that the heart rate of the user 101 is difficult to reach the target heart rate (or the target heart rate range) simply by increasing the torque level, the processor 310 may cause the guide (e.g., the audio guide, etc.) indicating the exercise speed of the walking-in-place exercise needs to be increased to be output by at least one of the wearable device 120, the smart watch 132, or the electronic device 110.

In operation 3240, the wearable device 120 (e.g., the processor 310) may maintain the torque level when the heart rate of the user 101 reaches the target heart rate (or the target heart rate range). For example, at the sixth torque level, the heart rate of the user 101 may reach the target heart rate. In this case, the processor 310 may maintain the sixth torque level as the torque level for a walking-in-place exercise.

In operation 3250, the wearable device 120 (e.g., the processor 310) may change (or decrease) the torque level when the heart rate of the user 101 exceeds the target heart rate (or the target heart rate range).

For example, when the heart rate of the user 101 exceeds the target heart rate (or the target heart rate range) at the sixth torque level, the processor 310 may decrease the torque level for a walking-in-place exercise from the sixth torque level to the fifth torque level. If the heart rate of the user 101 does not reach the target heart rate (or the target heart rate range) within a determined time at the fifth torque level, the processor 310 may decrease the torque level for a walking-in-place exercise from the fifth torque level to the fourth torque level. When the heart rate of the user 101 reaches the target heart rate (or the target heart rate range) at the fourth torque level, the processor 310 may maintain the fourth torque level as the torque level for a walking-in-place exercise.

According to an embodiment, the processor 310 may decrease the torque level sequentially (or by one level) until the heart rate of the user 101 reaches the target heart rate (or the target heart rate range). Embodiments are not limited thereto, and the processor 310 may decrease the torque level by more than two levels so that the heart rate of the user 101 may reach the target heart rate (or the target heart rate range) more quickly. For example, when the torque level for a walking-in-place exercise is the seventh torque level, the processor 310 may decrease the torque level for a walking-in-place exercise from the seventh torque level to the fifth torque level (or the fourth torque level, the third torque level, the second torque level, or the first torque level).

According to an embodiment, the processor 310 may determine whether the heart rate of the user 101 is difficult to reach the target heart rate (or the target heart rate range) even if the torque level is decreased while the heart rate of the user 101 exceeds the target heart rate (or the target heart rate range). The processor 310 may determine whether it is difficult to cause the heart rate of the user 101 to reach the target heart rate (or the target heart rate range) simply by decreasing the torque level. In response to the determination that the heart rate of the user 101 is difficult to reach the target heart rate (or the target heart rate range), the processor 310 may control the wearable device 120 to provide the user 101 with a guide (e.g., an audio guide, etc.) indicating the exercise speed of the walking-in-place exercise needs to be decreased.

For example, when the heart rate of the user 101 changes little (or when the decrement of the heart rate is less than a predetermined level) even if the torque level is decreased, the processor 310 may determine that the heart rate of the user 101 is difficult to reach the target heart rate (or the target heart rate range) simply by decreasing the torque level. The processor 310 may determine that the heart rate of the user 101 is difficult to reach the target heart rate (or the target heart rate range) simply by decreasing the torque level if the heart rate of the user 101 does not reach the target heart rate (or the target heart rate range) even at the lowest torque level (e.g., the first torque level). In response to the determination that the heart rate of the user 101 is difficult to reach the target heart rate (or the target heart rate range) simply by decreasing the torque level, the processor 310 may cause the guide (e.g., the audio guide, etc.) indicating the exercise speed of the walking-in-place exercise needs to be decreased to be provided to the user 101 by at least one of the wearable device 120, the smart watch 132, or the electronic device 110.

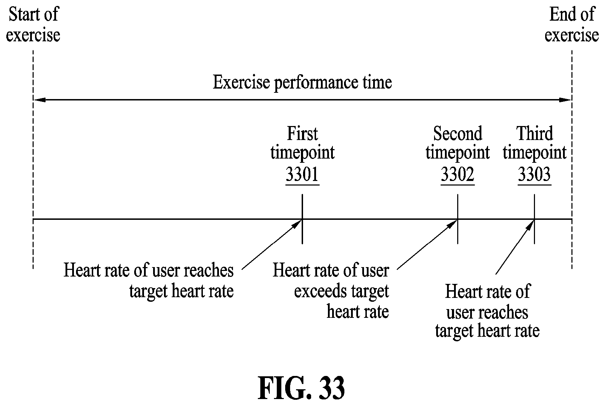

FIG. 33 is a diagram illustrating an example of an operation of controlling a torque level based on the heart rate of a user during a walking-in-place exercise of the user by a wearable device according to an embodiment.

Referring to FIG. 33, according to an embodiment, the wearable device 120 may determine a torque level (e.g., a starting torque level) for a walking-in-place exercise of the user 101 based on a physical fitness assessment result of the user 101, first user input information (e.g., a level value of an exercise intensity of a walking-in-place exercise input from the user 101 and an operation mode of the wearable device 120 input from the user 101), or second user input information (e.g., one of a plurality of torque levels). For example, the wearable device 120 may determine a second torque level to be the torque level (e.g., the starting torque level) for a walking-in-place exercise of the user 101.

According to an embodiment, the wearable device 120 may provide the user 101 with an external force (or a torque) according to the determined torque level (e.g., the starting torque level) when the user 101 starts a walking-in-place exercise.

According to an embodiment, the wearable device 120 may increase the torque level so that the heart rate of the user 101 may reach a target heart rate (or a target heart rate range) when the heart rate of the user 101 is less than the target heart rate (or the target heart rate range). The wearable device 120 may provide the user 101 with a guide indicating the exercise speed needs to be increased.

According to an embodiment, the heart rate of the user 101 may reach the target heart rate (or the target heart rate range) at a first timepoint 3301. The torque level at the first timepoint 3301 may be, for example, a fifth torque level. The wearable device 120 may maintain the fifth torque level as the torque level for a walking-in-place exercise after the first timepoint 3301. In the example shown in FIG. 33, the torque level between the first timepoint 3301 and a second timepoint 3302 may be the fifth torque level.

According to an embodiment, the heart rate of the user 101 at the second timepoint 3302 may exceed the target heart rate (or the target heart rate range). In this case, the wearable device 120 may decrease the torque level to cause the heart rate of the user 101 to reach the target heart rate (or the target heart rate range). For example, the wearable device 120 may decrease the torque level for a walking-in-place exercise from the fifth torque level to a fourth torque level.

According to an embodiment, while the wearable device 120 is providing the user 101 with an external force (or a torque) according to the decreased torque level (e.g., the fourth torque level), the heart rate of the user 101 may reach the target heart rate (or the target heart rate range) at a third timepoint 3303. In this case, the wearable device 120 may maintain the fourth torque level as the torque level for a walking-in-place exercise.

The embodiments described with reference to FIGS. 1 to 32 may apply to the wearable device 120 of FIG. 33.

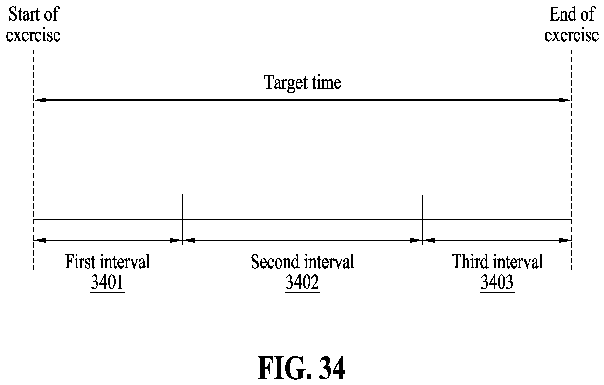

FIG. 34 is a diagram illustrating an example of an operation of determining one or more target heart rates in a target time of a walking-in-place exercise of a user by a wearable device according to an embodiment.

According to an embodiment, the wearable device 120 may calculate (or determine) a target time for a walking-in-place exercise for the user 101 based on user information (e.g., the age and health condition of the user 101, etc.) and/or a physical fitness assessment result of the user 101, and recommend the calculated target time to the user 101.

According to an embodiment, the wearable device 120 may receive a target time for a walking-in-place exercise from the user 101. For example, the user 101 may input the target time for a walking-in-place exercise into at least one of the smart watch 132 or the electronic device 110. The wearable device 120 may receive the target time input by the user 101 from at least one of the smart watch 132 or the electronic device 110. The wearable device 120 may determine the received target time (e.g., the target time input by the user 101) to be the target time for a walking-in-place exercise.

According to an embodiment, the wearable device 120 may divide the target time of a walking-in-place exercise into a plurality of intervals and determine a target heart rate (or a target heart rate range) for each of the time intervals. For example, in the example shown in FIG. 34, the wearable device 120 may divide the target time into a first interval 3401, a second interval 3402, and a third interval 3403. The wearable device 120 may determine a first target heart rate (or a first target heart rate range) in the first interval 3401, determine a second target heart rate (or a second target heart rate range) in the second interval 3402, and determine a third target heart rate (or a third target heart rate range) in the third interval 3403, based on the user information (e.g., the age and health condition information of the user 101, etc.) and/or the physical fitness assessment result of the user 101.

According to an embodiment, the wearable device 120 may change (e.g., increase or decrease) the torque level or provide the user 101 with a guide for adjusting (e.g., increasing or decreasing) the exercise speed, until the heart rate of the user 101 reaches the first target heart rate (or the first target heart rate range) in the first interval 3401.

According to an embodiment, the wearable device 120 may change (e.g., increase or decrease) the torque level or provide the user 101 with a guide for adjusting (e.g., increasing or decreasing) the exercise speed, until the heart rate of the user 101 reaches the second target heart rate (or the second target heart rate range) in the second interval 3402.

According to an embodiment, the wearable device 120 may change (e.g., increase or decrease) the torque level or provide the user 101 with a guide for adjusting (e.g., increasing or decreasing) the exercise speed, until the heart rate of the user 101 reaches the third target heart rate (or the third target heart rate range) in the third interval 3403.

According to an embodiment, the wearable device 120 may provide the user 101 with a customized walking-in-place exercise program. For example, the wearable device 120 may determine a first target (e.g., a first target walking-in-place count and/or a first target walking-in-place speed) during the first interval 3401 of the target time of a walking-in-place exercise, determine a second target (e.g., a second target walking-in-place count and/or a second target walking-in-place speed) during the second interval 3402, and determine a third target (e.g., a third target walking-in-place count and/or a third target walking-in-place speed) during the third interval 3403, based on the user information (e.g., the age and health condition information of the user 101, etc.) and/or the physical fitness assessment result of the user 101. The wearable device 120 may generate a customized walking-in-place exercise program including the respective targets for the intervals 3401, 3402, and 3403, and provide the user 101 with the customized walking-in-place exercise program. Depending on the implementation, at least one of the electronic device 110 or the server 140 may generate a customized walking-in-place exercise program for a user, and provide the user with the customized walking-in-place exercise program.

According to an embodiment, the wearable device 120 may determine whether the walking-in-place count (and/or the walking-in-place speed) of the user 101 reaches (or satisfies) the first target in the first interval 3401. The wearable device 120 may provide the user 101 with a guide (e.g., a guide informing a remaining walking count and/or a guide indicating the walking speed needs to be decreased or increased) or change (e.g., increase or decrease) the torque level such that the walking-in-place count (and/or the walking-in-place speed) of the user 101 reaches the first target in the first interval 3401.

According to an embodiment, the wearable device 120 may determine whether the walking-in-place count (and/or the walking-in-place speed) of the user 101 reaches (or satisfies) the second target in the second interval 3402. The wearable device 120 may provide the user 101 with a guide (e.g., a guide informing a remaining walking count and/or a guide indicating the walking speed needs to be decreased or increased) or change (e.g., increase or decrease) the torque level such that the walking-in-place count (and/or the walking-in-place speed) of the user 101 reaches the second target in the second interval 3402.

According to an embodiment, the wearable device 120 may determine whether the walking-in-place count (and/or the walking-in-place speed) of the user 101 reaches (or satisfies) the third target in the third interval 3403. The wearable device 120 may provide the user 101 with a guide (e.g., a guide informing a remaining walking count and/or a guide indicating the walking speed needs to be decreased or increased) or change (e.g., increase or decrease) the torque level such that the walking-in-place count (and/or the walking-in-place speed) of the user 101 reaches the third target in the third interval 3403.

According to an embodiment, the wearable device 120 may evaluate the walking-in-place exercise of the user 101 through whether the walking-in-place count (and/or the walking-in-place speed) of the user 101 reaches (or satisfies) the first target in the first interval 3401, whether the walking-in-place count (and/or the walking-in-place speed) of the user 101 reaches (or satisfies) the second target in the second interval 3402, and whether the walking-in-place count (and/or the walking-in-place speed) of the user 101 reaches (or satisfies) the third target in the third interval 3403. For example, the wearable device 120 may calculate a relatively high score for the walking-in-place exercise of the user 101 when the first to third targets are satisfied in the first interval 3401 to the third interval 3403, respectively, compared to when any one of the first to third targets is not satisfied.

According to an embodiment, unlike the example shown in FIG. 34, a target time for a walking-in-place exercise may not be provided. For example, the wearable device 120 may not determine a target time for a walking-in-place exercise or may not receive a target time for a walking-in-place exercise from the user 101. If a target time for a walking-in-place exercise is not provided, the wearable device 120 may determine a target walking-in-place count and a target heart rate (or a target heart rate range) to be achieved during a walking-in-place exercise based on the user information (e.g., the age and health condition information of the user 101, etc.) and/or the physical fitness assessment result. When the heart rate of the user 101 is less than the target heart rate (or the target heart rate range) during a walking-in-place exercise, the wearable device 120 may increase the torque level or provide the user 101 with a guide for increasing the exercise speed. When the heart rate of the user 101 exceeds the target heart rate (or the target heart rate range) during a walking-in-place exercise, the wearable device 120 may decrease the torque level or provide the user 101 with a guide for decreasing the exercise speed. When the heart rate of the user 101 reaches the target heart rate (or the target heart rate range) during a walking-in-place exercise, the wearable device 120 may maintain the torque level or provide the user 101 with a guide for maintaining the exercise speed. When the accumulated walking-in-place count of the user 101 reaches a target walking-in-place count, the wearable device 120 may not provide the user 101 with an external force (or a torque) and inform the user 101 of the end of the exercise.

The embodiments described with reference to FIGS. 1 to 33 may apply to the wearable device 120 of FIG. 34.

According to an embodiment, a wearable device 120, 200, 300, 300-1 may include a driving module (e.g., the driving module 30) configured to provide a user 101 with an external force, an angle sensor (e.g., the angle sensor 320 and/or the angle sensor 320-1) configured to obtain angle values by measuring an angle of a joint of the user, and a processor (e.g., the processor 310). The processor may receive the angle values from the angle sensor. The processor may determine one or more angle values among the received angle values. The determined one or more angle values may include one or more of (i) an angle value at a cross timepoint at which both legs of the user cross, (ii) an angle value at a contact timepoint at which at least a portion of a foot of the user contacts a ground or a take-off timepoint at which the foot is taken off from the ground, (iii) at least one of a maximum angle value or a minimum angle value for a first period; or (iv) an angle value when an angular velocity value of the joint is at maximum. The processor may determine whether the user is performing a walking-in-place exercise based on at least one of a walking index value of the user or the determined one or more angle values. The processor may control the driving module to provide the user with an external force suitable for the walking-in-place exercise in response to the determination that the user is performing the walking-in-place exercise.

According to an embodiment, the processor may determine whether the angle value at the cross timepoint is distributed adjacent to a first value, and determine that the user is performing the walking-in-place exercise in response to the determination that the angle value at the cross timepoint is distributed adjacent to the first value.

According to an embodiment, the processor may determine whether the cross timepoint occurs periodically, and determine that the user is performing the walking-in-place exercise in response to the determination that the cross timepoint occurs periodically and that the angle value at the cross timepoint is distributed adjacent to the first value.

According to an embodiment, the processor may recognize the contact timepoint or the take-off timepoint based on acceleration information of the user, determine whether the angle value at the contact timepoint or the take-off timepoint is distributed adjacent to a first value, and determine that the user is performing the walking-in-place exercise in response to the determination that the angle value at the contact timepoint or the take-off timepoint is distributed adjacent to the first value.

According to an embodiment, the contact timepoint may include a heel-strike timepoint at which a heel of the user contacts the ground, and the take-off timepoint may include a toe-off timepoint at which a toe of the user is taken off from the ground.

According to an embodiment, the processor may determine whether the joint rotates mainly in a front rotation area rather than a rear rotation area through at least one of the maximum angle value or the minimum angle value, and determine that the user is performing the walking-in-place exercise in response to the determination that the joint rotates mainly in the front rotation area.

According to an embodiment, the processor may calculate a difference value between the maximum angle value and the minimum angle value, determine whether the calculated difference value exceeds a predetermined level, and determine that the user is performing the walking-in-place exercise when the calculated difference value exceeds the predetermined level.

According to an embodiment, the processor may determine whether a maximum angular velocity of the joint occurs in a front rotation area of the joint through the angle value when the angular velocity value of the joint is at maximum, and determine that the user is performing the walking-in-place exercise in response to the determination that the maximum angular velocity of the joint occurs in the front rotation area.

According to an embodiment, the walking index value may include a walking speed value of the user. The processor may determine whether the walking speed value is less than a threshold speed value, and determine that the user is performing the walking-in-place exercise in response to the determination that the walking speed value is less than the threshold speed value.

According to an embodiment, the walking index value may include a stride value of the user. The processor may determine whether the stride value is less than a threshold stride value, and determine that the user is performing the walking-in-place exercise in response to the determination that the stride value is less than the threshold stride value.

According to an embodiment, the processor may determine whether a maximum angular velocity of the joint occurs in a front rotation area of the joint through the angle value when the angular velocity value of the joint is at maximum, and determine that the user is performing the walking-in-place exercise using at least one of the (i), the (ii), the (iii), or the walking index value in response to the determination that the maximum angular velocity of the joint occurs in the front rotation area.

According to an embodiment, the processor may determine a first torque ratio value for a first motion of raising a leg of the user and a second torque ratio value for a second motion of placing the leg down based on an exercise intensity (e.g., a level value of an exercise intensity) of the user in response to the determination that the user is performing the walking-in-place exercise. The processor may determine a first torque value based on a first difference value between both joint angles of the user when the user performs the first motion, determine a first adjusted torque value obtained by adjusting the determined first torque value based on the determined first torque value and the determined first torque ratio value, and control the driving module to provide the user with an external force corresponding to the determined first adjusted torque value. The processor may determine a second torque value based on a second difference value between both joint angles of the user when the user performs the second motion, determine a second adjusted torque value obtained by adjusting the second determined torque value based on the determined second torque value and the determined second torque ratio value, and control the driving module to provide the user with an external force corresponding to the determined second adjusted torque value.

"Based on" as used herein covers based at least one.

Each embodiment herein may be used in combination with any other embodiment(s) described herein.

According to an embodiment, the processor may control the driving module to provide an external force to a first leg and prevent or reduce an external force from being provided to a second leg when the first leg is raised and the second leg corresponds to a supporting leg while the user is performing the walking-in-place exercise, and prevent or reduce an external force from being provided to each of the first leg and the supporting leg when the first leg is placed down.

According to an embodiment, the processor may control the driving module to provide the user with an external force according to a torque level indicating a torque magnitude and a torque type when the user is performing the walking-in-place exercise. The processor may increase the torque level when a heart rate of the user at the torque level is less than a target heart rate. The processor may decrease the torque level when the heart rate of the user at the torque level exceeds the target heart rate. The processor may maintain the torque level when the heart rate of the user at the torque level reaches the target heart rate.

According to an embodiment, a wearable device 120, 200, 300, 300-1, 2900, 3000 may include a driving module 30, 2920, 3020 configured to provide a user 101 with an external force, and a processor 310, 2910, 3010. The processor may determine a first torque value based on a first difference value of both joint angles of the user when the user performs a first motion of raising a leg during a walking-in-place exercise. The processor may control the driving module to provide an external force corresponding to the determined first torque value to the leg. The processor may determine a second torque value based on a second difference value of both joint angles of the user when the user performs a second motion of placing the leg down during the walking-in-place exercise. The processor may control the driving module to provide an external force corresponding to the determined second torque value to the leg.

According to an embodiment, the processor may prevent or reduce an external force from being provided to a supporting leg during the walking-in-place exercise.

According to an embodiment, the processor may multiply the determined second torque value by "0" so as not to provide the user with an external force when the user performs the second motion.

According to an embodiment, the processor may determine a first torque ratio value for the first motion and a second torque ratio value for the second motion based on an exercise intensity of the user. The processor may determine a first adjusted torque value obtained by adjusting the determined first torque value based on the determined first torque value and the determined first torque ratio value. The processor may control the driving module to provide the user with an external force corresponding to the determined first adjusted torque value. The processor may determine a second adjusted torque value obtained by adjusting the second determined torque value based on the determined second torque value and the determined second torque ratio value. The processor may control the driving module to provide the user with an external force corresponding to the determined second adjusted torque value.

According to an embodiment, the processor may control the driving module to provide the user with an external force according to a torque level indicating a torque magnitude and a torque type when the user is performing the walking-in-place exercise. The processor may increase the torque level when a heart rate of the user at the torque level is less than a target heart rate. The processor may decrease the torque level when the heart rate of the user at the torque level exceeds the target heart rate. The processor may maintain the torque level when the heart rate of the user at the torque level reaches the target heart rate.

According to an embodiment, an operating method of a wearable device 120, 200, 300, 300-1, 2900 may include obtaining angle values by measuring an angle of a joint of a user 101, determining one or more angle values among the angle values, the determined one or more angle values including one or more of (i) an angle value at a cross timepoint at which both legs of the user cross, (ii) an angle value at a contact timepoint at which at least a portion of a foot of the user contacts a ground or a take-off timepoint at which the foot is taken off from the ground, (iii) at least one of a maximum angle value or a minimum angle value for a first period; or (iv) an angle value when an angular velocity value of the joint is at maximum, determining whether the user is performing a walking-in-place exercise based on at least one of a walking index value of the user or the determined one or more angle values, and providing the user with an external force suitable for the walking-in-place exercise in response to the determination that the user is performing the walking-in-place exercise.

According to an embodiment, an operating method of a wearable device 120, 200, 300, 300-1, 2900, 3000 may include determining a first torque value based on a first difference value of both joint angles of a user 101 when the user performs a first motion of raising a leg during a walking-in-place exercise, providing an external force corresponding to the determined first torque value to the leg, determining a second torque value based on a second difference value of both joint angles of the user when the user performs a second motion of placing the leg down during the walking-in-place exercise, and providing an external force corresponding to the determined second torque value to the leg.

The units described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors. Each controller herein may comprise processing circuitry.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described devices may be configured to act as one or more software odules in order to perform the operations of the above-described examples, or vice versa.

A number of embodiments have been described above. Nevertheless, it should be understood that various modifications may be made to these embodiments. For example, suitable results may be achieved if the described techniques are performed in a different order, and/or if components in a described system, architecture, device, or circuit are combined in a different manner, or replaced or supplemented by other components or their equivalents.

While the disclosure has been illustrated and described with reference to various embodiments, it will be understood that the various embodiments are intended to be illustrative, not limiting. It will further be understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

Therefore, other implementations, other embodiments, and/or equivalents of the claims are within the scope of the following claims.

## Claims

1. A wearable device (120, 200, 300, 300-1, 2900) comprising:
a driving module (30, 2920), comprising a motor and/or circuitry, configured to provide a user (101) with an external force;
an angle sensor (320, 320-1, 2930, 2940) configured to obtain angle values based on an angle of a joint of the user; and
at least one processor (310, 2910), comprising processing circuitry, individually and/or collectively configured to receive the angle values from the angle sensor, determine one or more angle values among the received angle values, determine whether the user is performing a walking-in-place exercise based on at least one of a walking index value of the user or the determined one or more angle values, and control the driving module to provide the user with an external force suitable for the walking-in-place exercise in response to the determination that the user is performing the walking-in-place exercise,
wherein the determined one or more angle values comprise at least one of:
(i) an angle value at a cross timepoint at which both legs of the user cross,
(ii) an angle value at a contact timepoint at which at least a portion of a foot of the user contacts a ground or a take-off timepoint at which the foot is taken off from the ground, (iii) at least one of a maximum angle value or a minimum angle value for a first period; or (iv) an angle value when an angular velocity value of the joint is at maximum.

2. The wearable device of claim 1, wherein at least one processor is individually and/or collectively configured to determine whether the angle value at the cross timepoint is distributed adjacent to a first value, and determine that the user is performing the walking-in-place exercise in response to the determination that the angle value at the cross timepoint is distributed adjacent to the first value.

3. The wearable device of claim 2, wherein at least one processor is individually and/or collectively configured to determine whether the cross timepoint occurs periodically, and determine that the user is performing the walking-in-place exercise in response to the determination that the cross timepoint occurs periodically and that the angle value at the cross timepoint is distributed adjacent to the first value.

4. The wearable device of any of claims 1 to 3, wherein at least one processor is individually and/or collectively configured to recognize the contact timepoint and/or the take-off timepoint based on acceleration information of the user, determine whether the angle value at the contact timepoint and/or the take-off timepoint is distributed adjacent to a first value, and determine that the user is performing the walking-in-place exercise in response to the determination that the angle value at the contact timepoint and/or the take-off timepoint is distributed adjacent to the first value.

5. The wearable device of claim 4, wherein the contact timepoint comprises a heel-strike timepoint at which a heel of the user contacts the ground, and the take-off timepoint comprises a toe-off timepoint at which a toe of the user is taken off from the ground.

6. The wearable device of any of claims 1 to 5, wherein at least one processor is individually and/or collectively configured to determine whether the joint rotates mainly in a front rotation area rather than a rear rotation area through at least one of the maximum angle value and/or the minimum angle value, and determine that the user is performing the walking-in-place exercise in response to the determination that the joint rotates mainly in the front rotation area.

7. The wearable device of any of claims 1 to 6, wherein at least one processor is individually and/or collectively configured to calculate a difference value between the maximum angle value and the minimum angle value, determine whether the calculated difference value exceeds a predetermined level, and determine that the user is performing the walking-in-place exercise when the calculated difference value exceeds the predetermined level.

8. The wearable device of any of claims 1 to 7, wherein at least one processor is individually and/or collectively configured to determine whether a maximum angular velocity of the joint occurs in a front rotation area of the joint through the angle value when the angular velocity value of the joint is at maximum, and determine that the user is performing the walking-in-place exercise in response to the determination that the maximum angular velocity of the joint occurs in the front rotation area.

9. The wearable device of any of claims 1 to 8, wherein the walking index value comprises a walking speed value of the user, and at least one processor is individually and/or collectively configured to determine whether the walking speed value is less than a threshold speed value, and determine that the user is performing the walking-in-place exercise in response to the determination that the walking speed value is less than the threshold speed value.

10. The wearable device of any of claims 1 to 9, wherein
the walking index value comprises a stride value of the user, and
at least one processor is individually and/or collectively configured to determine whether the stride value is less than a threshold stride value, and determine that the user is performing the walking-in-place exercise in response to the determination that the stride value is less than the threshold stride value.

11. The wearable device of any of claims 1 to 10, wherein at least one processor is individually and/or collectively configured to determine whether a maximum angular velocity of the joint occurs in a front rotation area of the joint through the angle value when the angular velocity value of the joint is at maximum, and determine that the user is performing the walking-in-place exercise using at least one of the (i), the (ii), the (iii), or the walking index value in response to the determination that the maximum angular velocity of the joint occurs in the front rotation area.

12. The wearable device of any of claims 1 to 11, wherein at least one processor is individually and/or collectively configured to:
determine a first torque ratio value for a first motion of raising a leg of the user and a second torque ratio value for a second motion of placing the leg down based on an exercise intensity of the user in response to the determination that the user is performing the walking-in-place exercise,
determine a first torque value based on a first difference value between both joint angles of the user when the user performs the first motion, determine a first adjusted torque value obtained by adjusting the determined first torque value based on the determined first torque value and the determined first torque ratio value, and control the driving module to provide the user with an external force corresponding to the determined first adjusted torque value, and
determine a second torque value based on a second difference value between both joint angles of the user when the user performs the second motion, determine a second adjusted torque value obtained by adjusting the second determined torque value based on the determined second torque value and
the determined second torque ratio value, and control the driving module to provide the user with an external force corresponding to the determined second adjusted torque value.

13. The wearable device of any of claims 1 to 12, wherein at least one processor is individually and/or collectively configured to control the driving module to provide an external force to a first leg and prevent or reduce an external force from being provided to a second leg when the first leg is raised and the second leg corresponds to a supporting leg while the user is performing the walking-in-place exercise, and prevent or reduce an external force from being provided to each of the first leg and the supporting leg when the first leg is placed down.

14. The wearable device of any of claims 1 to 13, wherein at least one processor is individually and/or collectively configured to control the driving module to provide the user with an external force according to a torque level indicating a torque magnitude and a torque type when the user is performing the walking-in-place exercise, increase the torque level when a heart rate of the user at the torque level is less than a target heart rate, decrease the torque level when the heart rate of the user at the torque level exceeds the target heart rate, and maintain the torque level when the heart rate of the user at the torque level reaches the target heart rate.

15. A wearable device (120, 200, 300, 300-1, 2900, 3000) comprising:
a driving module (30; 2920; 3020), comprising a motor and/or circuitry, configured to provide a user (101) with an external force; and
at least one processor (310; 2910; 3010), comprising processing circuitry, individually and/or collectively configured to determine a first torque value based on a first difference value of both joint angles of the user when the user performs a first motion of raising a leg during a walking-in-place exercise, control the driving module to provide an external force corresponding to the determined first torque value to the leg, determine a second torque value based on a second difference value of both joint angles of the user when the user performs a second motion of placing the leg down during the walking-in-place exercise, and control the driving module to provide an external force corresponding to the determined second torque value to the leg.
